# EUROPEAN PATENT APPLICATION

(11) **EP 4 246 340 A1**
(43) Date of publication of application: **20.09.2023**
(21) Application number: 21914419.3
(22) Date of filing: 28.12.2021
(51) Int. Cl.: G06F 16/24, G06F 9/50

(54) **SYSTEM, METHOD, AND APPARATUS FOR DATA QUERY USING NETWORK DEVICE**

(30) Priority: 29.12.2020 CN 202011588814
(71) Applicant: Huawei Technologies Co., Ltd., Shenzhen, Guangdong 518129 (CN)
(72) Inventor: LUO, Dan, Shenzhen, Guangdong 518129 (CN); ZHANG, Wei, Shenzhen, Guangdong 518129 (CN); LI, Zheng, Shenzhen, Guangdong 518129 (CN); LIU, Yu, Shenzhen, Guangdong 518129 (CN); WU, Yuye, Shenzhen, Guangdong 518129 (CN); MAO, Wei, Shenzhen, Guangdong 518129 (CN); ZHANG, Zanqing, Shenzhen, Guangdong 518129 (CN)
(74) Representative: Epping - Hermann - Fischer
(86) International application number: PCT/CN2021/142146
(87) International publication number: WO 2022/143685

(57) **Abstract**

This application provides a system, a method, and an apparatus for data query using a network device. A central node of the system is connected to a working node through a network device. The network device is, for example, a network interface card, a switch, a router, or the like. The central node generates a plurality of tasks based on a query request input by a user. When allocating execution devices to the plurality of tasks, the central node configures execution devices of some tasks as the network device, configures execution devices of some tasks as the working node, and then sends configuration instructions to the configured network device and working node, to set, on the network device and the working node, tasks configured for the network device and working node. After configuration is completed, because all data transmitted between the working node and the central node needs to pass through the network device, the network device executes the set tasks on the data that passes through the network device, to reduce a calculation amount of the working node, reduce a load of a processor on the working node, and accelerate data processing.

## Description

### TECHNICAL FIELD

This application relates to the field of computer technologies, and in particular, to a system, a method, and an apparatus for data query using a network device.

### BACKGROUND

In the current information era, with rapid development of computers and information technologies, an amount of generated data increases rapidly. An amount of data stored in a database reaches hundreds of TBs (Terabytes, terabytes) (1 TB=1024 GB) to even tens to hundreds of PBs (Petabytes, petabytes) (1 PB=1024 TB). The data is from various sources, is of a large amount, and is in various forms. It is very important to quickly find target data in the database.

As a data volume increases greatly, to ensure data query efficiency, a current main manner is to increase hardware resources for processing data, for example, increase a processing capability and an internal storage capacity of a processor (for example, a central processing unit (central processing unit, CPU)) of each node in a query system. However, increasing the processing capability and the internal storage capacity of the processor causes an increase in product costs. In addition, space for increasing the processing capability of the processor is limited. Therefore, sometimes, the query efficiency cannot be improved by enhancing the processing capability of the processor.

### SUMMARY

This application provides a data query method and apparatus, to accelerate data processing without enhancing CPU performance and/or an internal storage capacity.

According to a first aspect, this application provides a data query system. The system includes a central node, a working node, and a network device, where the central node is connected to the working node through the network device. The central node generates a plurality of tasks based on a query request input by a user. When allocating execution devices to the plurality of tasks, the central node configures execution devices of some tasks as the network device, configures execution devices of some tasks as the working node, and then sends configuration instructions to configure corresponding tasks on the network device and the working node. After the tasks configured for the network device and the working node are set on the network device and the working node, the preconfigured tasks may be executed on data when the data passes through the network device.

In the foregoing design, the central node may configure some tasks to the network device for execution. In this way, when data passes through the network device, the network device executes the preconfigured tasks, and then forwards the data to another execution device. Compared with a solution in a related technology in which all tasks are processed by the working node, this reduces a calculation amount of the working node, and reduces a load of a processor on the working node, so that data processing can be accelerated without increasing a processing capability of the processor on the working node.

In a possible implementation method, after the plurality of tasks are generated, the central node is configured to: search for an offloadable task in the plurality of tasks, and set an execution device of the offloadable task as the network device, where the offloadable task is a preset task that is to be offloaded to the network device for execution.

In the foregoing design, the offloadable task that is suitable for being offloaded to the network device may be preconfigured, and the offloadable task may be conveniently and quickly found from the plurality of tasks.

In a possible implementation method, the central node is configured to send a setting instruction of the offloadable task to the network device, and the network device is configured to set the offloadable task based on the setting instruction.

In a possible implementation method, the network device is a network interface card of the working node or a forwarding device, and the forwarding device may be a switch or a router.

In a possible implementation method, the forwarding device includes a data port and a control port. The central node is configured to send the setting instruction of the offloadable task to the forwarding device through the control port of the forwarding device, and is further configured to send a setting instruction of a task whose execution device is the network interface card or the working node to the forwarding device through the data port. Correspondingly, when receiving the setting instruction through the control port, the forwarding device sets the offloadable task indicated in the setting instruction; when receiving the setting instruction from the data port, the forwarding device forwards the setting instruction received from the data port.

In the foregoing design, the forwarding device may quickly identify, through the data port, a data packet that needs to be forwarded, and forward the data packet to a corresponding device, without a need of parsing the data packet, so that a sending delay is reduced. In addition, the forwarding device may distinguish, through the control port, a setting instruction sent by the central node, so that incorrect forwarding and missing configuration are avoided.

In a possible implementation method, when the network device that executes the offloadable task is the network interface card in the working node, the central node is configured to send the setting instruction of the offloadable task to the working node, so that the working node sets the offloadable task on the network interface card of the working node based on the setting instruction.

In the foregoing design, the working node sets the offloadable task on the network interface card based on the setting instruction. When an offloading policy is integrated on the working node, whether to offload the offloadable task to the network interface card may be further determined based on an actual load state of the network interface card and the like. In this way, a manner in which the working node controls the network interface card to execute the offloadable task is more flexible.

In a possible implementation method, the setting instruction of the offloadable task includes an offloadable flag, and the working node sets the offloadable task on the network interface card of the working node after receiving the setting instruction and when determining that the setting instruction includes the offloadable flag.

In a possible implementation method, after receiving a data packet and when determining that the data packet includes an identifier of the offloadable task executed by the network device, the network device executes the offloadable task on the data packet.

In the foregoing design, the network device may monitor, based on the identifier of the offloadable task, the data packet of the offloadable task, and execute the offloadable task on the data packet. In this way, no independent execution instruction is required, the offloadable task executed by the network device can be quickly and accurately identified, overheads are reduced, and data processing is also accelerated.

In a possible implementation method, the central node is further configured to send the setting instruction of the offloadable task after determining the offloadable task and when determining that the offloadable task meets an offloading policy corresponding to the offloadable task.

In the foregoing design, it may be further determined, based on actual factors such as a network environment, whether the offloadable task is suitable for being offloaded to the network device for execution, so that data query efficiency is further improved.

In a possible implementation method, the task indicates a to-be-executed operation and an operation data, and the operation data is data of the to-be-executed operation. A setting instruction of the task may include a task identifier and operator information, where the task identifier is used to uniquely identify the task in the query request, the operator information includes an operator identifier, the operator identifier uniquely identifies an operator, one operation may be completed by running one or more operators, and the operator is run to perform, on the operation data, the operation indicated by the task.

In a possible implementation method, the offloadable task means that all operators required for completing the task are offloadable operators. The offloadable operators may be preset. For example, the offloadable operators include: a filter (filter) operator, an aggregation (aggregation) operator, a distinct (non-null and unique) operator, a TopN (first N values) operator, and a join (table join) operator. Alternatively, the offloadable operators are preset operators that meet corresponding offloadable policies. For example, the preset operators and the offloadable policies corresponding to the preset operators include: a filter operator, where an offloadable policy corresponding to the filter operator is that a selection rate of executing the filter operator in a filter column is not less than a preset threshold (for example, a first preset value); an aggregation operator, where an offloadable policy corresponding to the aggregation operator is that when the aggregation operator is executed in an aggregation column, a cardinality of data on which aggregation is performed in the aggregation column does not exceed a second preset value; and a distinct operator, where an offloadable policy corresponding to the distinct operator is that a cardinality of data in a column on which deduplication needs to be performed does not exceed a third preset value, where the first preset value, the second preset value, and the third preset value may be completely the same, or may be not completely the same, or may be completely different.

According to a second aspect, this application provides a data query method. The method may be applied to a central node, the central node is connected to a working node through a network device, and the method includes: The central node generates a plurality of tasks based on a query request input by a user. When allocating execution devices to the plurality of tasks, the central node configures execution devices of some tasks as the network device, configures execution devices of some tasks as the working node, and then sends setting instructions to configure corresponding tasks on the network device and the working node.

In a possible implementation method, after setting the task indicated by the setting instruction, the working node or the network device sends a feedback response to the central node, to indicate that configuration of the task delivered by the central node has been completed. Then, the central node may send an execution instruction of the query request, where the execution instruction is used to trigger the execution devices to execute the set tasks.

In a possible implementation method, determining an execution device of each task in the plurality of tasks includes: After the plurality of tasks are generated, the central node searches for an offloadable task in the plurality of tasks, and sets an execution device of the offloadable task as the network device, where the offloadable task is a preset task that is to be offloaded to the network device for execution.

In a possible implementation method, when determining that the execution device of the offloadable task is the network device, the central node sends a setting instruction of the offloadable task to the network device.

In a possible implementation method, the network device may be a network interface card of the working node or a forwarding device, and the forwarding device may be a switch or a router.

In a possible implementation method, when determining that the network device that executes the offloadable task is the network interface card of the working node, the central node sends the setting instruction of the offloadable task to the working node, so that the working node controls setting of the offloadable task on the network interface card. In a possible implementation method, when determining that the network device that executes the offloadable task is the forwarding device, the central node sends the setting instruction of the offloadable task to the forwarding device. In a possible implementation method, the setting instruction carries an offloadable flag.

In a possible implementation method, the offloadable task may be preset. The central node sends the setting instruction of the offloadable task to the network device after determining the offloadable task in the plurality of tasks and when determining that the offloadable task meets an offloading policy corresponding to the offloadable task.

In a possible implementation method, for an offloadable task that can be offloaded to a plurality of devices, when determining an execution device of the offloadable task, the central node may further determine the execution device based on priorities of the devices corresponding to the preset offloadable task.

In a possible implementation method, when determining the execution device of the offloadable task, the central node may further determine the execution device based on the priorities of the devices corresponding to the preset offloadable task and load states of the devices.

For beneficial effects implemented in the second aspect, refer to the descriptions of the beneficial effects of the method performed by the central node in the first aspect. Details are not described herein again.

According to a third aspect, this application provides a data query method. The method may be applied to a network device, the network device is configured to be connected to a central node and a working node, and the method includes: The network device receives a setting instruction sent by the central node, sets a corresponding task based on the setting instruction, and executes the task on a data packet that passes through the network device.

In a possible implementation method, the network device may be a network interface card of the working node or a forwarding device, and the forwarding device is, for example, a switch or a router.

In a possible implementation method, the forwarding device includes a data port and a control port. The forwarding device may receive a setting instruction from the control port, where data received through the control port is configured by the central node for the forwarding device, and the forwarding device sets an offloadable task based on the setting instruction received from the control port. The forwarding device may also receive a setting instruction from the data port, where data received through the data port is configured by the central node for a device other than the forwarding device, and the forwarding device forwards the data received from the data port.

In a possible implementation method, after receiving a data packet and when determining that the data packet includes an identifier of the offloadable task executed by the network device, the network device executes the offloadable task on the data packet.

For beneficial effects implemented in the third aspect, refer to the descriptions of the beneficial effects of the method performed by the network device in the first aspect. Details are not described herein again.

According to a fourth aspect, an embodiment of this application further provides a data query interface, including a query command input area, a task display area, and an execution device display area.

The query command input area is used to receive a query request input by a user.

The task display area is used to display a plurality of tasks that are generated based on the query request and that are for executing the query request.

The execution device display area is used to display an execution device of each task, where execution devices include a working node and a network device.

In a possible implementation method, the query command input area, the task display area, and the execution device display area are displayed on a same interface.

In a possible implementation method, the query command input area, the task display area, and the execution device display area are displayed on different interfaces.

According to a fifth aspect, an embodiment of this application further provides a data query interaction method. The method may be applied to a central node, the central node is a server of a client, and the method includes: A user inputs a query request on the client, and the client forwards the query request to the central node. Correspondingly, the central node receives the query request, and generates a plurality of tasks based on the query request. Further, the central node generates an execution plan of the query request, where the execution plan includes information about an execution device of each task. The central node may allocate the task to a working node for execution, or may allocate the task to a network device for execution. In other words, the execution device may be the working node or the network device. The central node may locally display the execution plan of the plurality of tasks, or the central node may send the execution plan to the client. Correspondingly, after receiving the execution plan, the client may display the execution plan, including displaying the plurality of tasks and the execution device of each task.

In a possible implementation method, the plurality of tasks are displayed in a tree structure on the client according to the execution plan.

In a possible implementation method, execution progresses of the plurality of tasks are displayed.

In the foregoing design, the user can intuitively understand the execution plan of the query request and a query progress, so that participation and use experience of the user are improved.

According to a sixth aspect, an embodiment of this application further provides a central device. The device includes a plurality of functional units, and the functional units may perform the functions performed in the steps in the method according to the second aspect. These functional units may be implemented through hardware, or may be implemented through software. In a possible design, the device includes a detection unit and a processing unit.

According to a seventh aspect, an embodiment of this application further provides a network device. The device includes a plurality of functional units, and the functional units may perform the functions performed in the steps in the method according to the third aspect. These functional units may be implemented through hardware, or may be implemented through software. In a possible design, the device includes a detection unit and a processing unit. According to an eighth aspect, an embodiment of this application further provides a central device. The device includes a processor, a memory, and a transceiver. The memory stores program instructions. The processor runs the program instructions in the memory, and communicates with another device through the transceiver, to implement the method provided in the second aspect.

According to a ninth aspect, an embodiment of this application further provides a network device. The device includes at least one processor and an interface circuit. The processor is configured to communicate with another apparatus through the interface circuit, to implement the method provided in the third aspect.

The processor may be a programmable gate array (field programmable gate array, FPGA), a data processing unit (data processing unit, DPU), a graphics processor (graphics processing unit, GPU), an application-specific integrated circuit (application-specific integrated circuit, ASIC), or a system on chip (system on chip, SoC).

According to a tenth aspect, this application further provides a computer-readable storage medium. The computer-readable storage medium stores instructions. When the instructions run on a computer, the computer is enabled to perform the method provided in the second aspect or the method provided in the third aspect.

### BRIEF DESCRIPTION OF DRAWINGS

FIG. 1 is a schematic diagram of a system architecture according to an embodiment of this application;
FIG. 2 is a schematic diagram of a query system architecture according to an embodiment of this application;
FIG. 3 is a schematic diagram of an internal structure of a working node according to an embodiment of this application;
FIG. 4 is a schematic diagram of a network architecture according to an embodiment of this application;
FIG. 5 is a schematic diagram of another network architecture according to an embodiment of this application;
FIG. 6 is a schematic diagram corresponding to a data query method according to an embodiment of this application;
FIG. 7 is a schematic interface diagram of an execution plan according to an embodiment of this application;
FIG. 8 is a schematic interface diagram of another execution plan according to an embodiment of this application;
FIG. 9 is a schematic diagram of network interface card resource allocation according to an embodiment of this application;
FIG. 10A and FIG. 10B are a schematic flowchart corresponding to another data query method according to an embodiment of this application;
FIG. 11 is a schematic structural diagram of a device according to an embodiment of this application; and
FIG. 12 is a schematic diagram of an apparatus structure of a network device according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

A network architecture and a service scenario described in embodiments of the present invention are intended to describe the technical solutions of embodiments of the present invention more clearly, and do not constitute a limitation on the technical solutions provided in embodiments of the present invention. A person of ordinary skill in the art may know: With evolution of the network architecture and emergence of new service scenarios, the technical solutions provided in embodiments of the present invention are also applicable to similar technical problems.

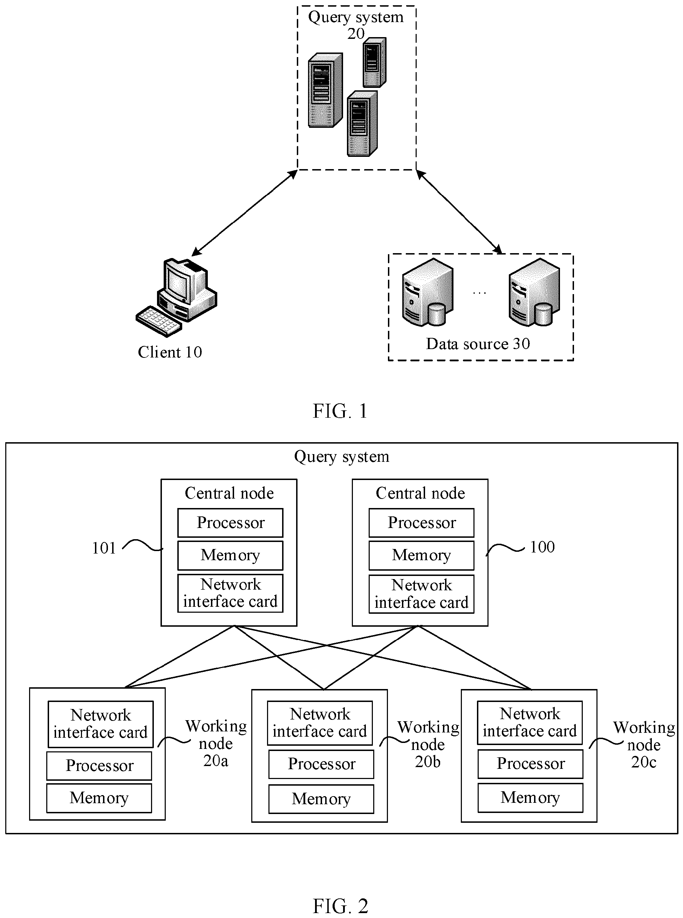

FIG. 1 is a schematic diagram of a system architecture to which an embodiment of this application is applicable. A system includes a client 10, a query system 20, and a data source 30.

The client 10 is a computing device on a user side, for example, a desktop computer or a notebook computer. From a perspective of hardware, a processor and an internal storage (which are not shown in FIG. 1) are disposed in the client 10. From a perspective of software, a client program runs on the client 10. The client program is used to: receive a query request triggered by a user, and interact with the query system 20, for example, send the query request to the query system 20. Correspondingly, a server program runs on the query system 20, and is used to interact with the client program, for example, receive the query request sent by the client 10. The query system 20 is further configured to: obtain, from the data source 30, original data that is requested by using the query request for query, and perform calculation, processing, or the like on the original data to obtain a query result (or target data). Subsequently, the query system 20 returns the obtained query result to the client 10.

The data source 30 may refer to a database or a database server. In this embodiment, the data source refers to a data source that can be analyzed by the query system, for example, a MySQL data source, an Oracle data source, or a HIVE data source. A data storage format may be an HDFS (hadoop distributed file system, Hadoop distributed file system) file, an ORC (Optimized Row Columnar) file, a CSV (comma-separated values, comma-separated values) file, or semi-structured data such as XML (extensible markup language, extensible markup language) or Json (javascript object notation, object notation) data. Certainly, the foregoing examples are merely examples, and the data source and the data storage format are not limited in this embodiment of this application. The data source may use distributed storage. Correspondingly, from a perspective of hardware, the data source may include one or more storage nodes. The storage node may be a storage server, a desktop computer, a controller of a storage array, a hard disk, or the like. To improve query efficiency, the query system may use a massively parallel processing (massively parallel processing, MPP) architecture, for example, a Presto query engine. The Presto query engine is an open-source MPP SQL (structured query language, structured query language) query engine, namely, a distributed SQL query engine, is configured to query a big data set distributed in one or more different data sources, and is applicable to interactive analysis and query. Specifically, in the MPP architecture, tasks are distributed to a plurality of servers or nodes in parallel, and the tasks are executed on the servers or nodes in parallel. For example, a student information table includes information such as names, ages, and student numbers of students. A user triggers a query request to request to query a student whose name is "Xiao Ming" in the student information table. In this case, in a query system of the MPP architecture, a plurality of nodes may separately perform query based on a part of rows in the student information table, so that query time can be shortened. Therefore, total query time is reduced, and query efficiency is improved. It should be understood that a larger quantity of nodes participating in query indicates shorter query time required for a same query request.

The following uses the MPP architecture as an example to describe in detail the query system provided in this embodiment of this application.

With reference to FIG. 2, the query system in this embodiment mainly includes a central node cluster and a working node cluster. As shown in FIG. 2, the central node cluster includes one or more central nodes (where FIG. 2 shows only two central nodes 100 and 101, but a quantity of central nodes is not limited in this application). The working node cluster includes one or more working nodes (where FIG. 2 shows three working nodes 20a, 20b, and 20c, but this application is not limited to the three working nodes).

The central node is configured to: receive a query request sent by the client, parse the received query request into one or more tasks, and then deliver the one or more tasks to a plurality of working nodes in parallel. The plurality of working nodes may process the allocated tasks in parallel. It should be understood that the central node may allocate the tasks to some or all working nodes in the query system in parallel. In addition, the tasks allocated to the working nodes may be completely the same, or may be not completely the same, or may be completely different. This is not limited in this embodiment of this application. It should be noted that, the central node may be a node selected by each working node from the working nodes to undertake a function of the central node, or may be a specific device. In addition, when there are a plurality of central nodes in the query system, a query request sent by the client is routed to any one of the plurality of central nodes. In this way, the plurality of central nodes in the query system may respond to a plurality of query requests at a time, and the plurality of query requests may be sent by a plurality of clients, or may be sent by one client.

The working node is configured to: receive the task sent by the central node, and execute the task. For example, the executed task includes obtaining to-be-queried data from the data source, performing various calculation processing on the obtained data, and the like. The tasks may be processed by the working nodes in parallel. Therefore, results obtained after parallel processing are finally summarized and fed back to the client.

Continue to refer to FIG. 2. From a perspective of hardware, the central node and the working node each include at least a processor, a memory, and a network interface card. The following uses the working node 20a as an example to describe in detail a connection relationship and a working manner of the foregoing hardware.

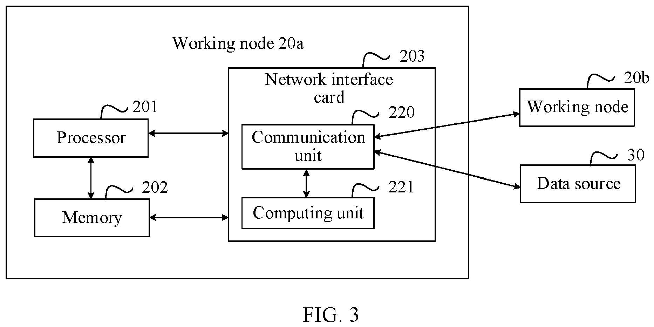

The following uses the working node 20a as an example for description. FIG. 3 is a schematic diagram of an internal structure of the working node 20a. As shown in FIG. 3, the working node 20a mainly includes a processor 201, a memory 202, and a network interface card 203. The processor 201, the memory 202, and the network interface card 203 communicate with each other through a communication bus.

The processor 201 may be a central processing unit (central processing unit, CPU), and may be configured to perform calculation, processing, or the like on data. The memory 202 is an apparatus configured to store the data, and the memory includes an internal storage and a hard disk. Data may be read from or written into the internal storage at any time, and a reading/writing speed is high. The internal storage may be used as a temporary data memory of a running program. The internal storage includes at least two types of memories, such as a random access memory (Random Access Memory, RAM) and a read-only memory (Read-Only Memory, ROM). Compared with the internal storage, the hard disk has a lower speed of reading and writing data. Therefore, the hard disk is usually configured to store data persistently. The hard disk includes at least the following types: a solid state disk (solid state disk or solid state drive, SSD), a mechanical hard disk (mechanical hard disk, HDD), and a hard disk of another type. Usually, data in the hard disk needs to be first read into the internal storage, and the processor 201 or a computing unit 221 obtains the data from the internal storage. An internal storage resource of the processor 230 and an internal storage resource of the computing unit 221 may be shared, or may be independent of each other. This is not limited in this embodiment of this application.

The network interface card 203 is configured to implement data exchange and data processing. From a perspective of hardware, the network interface card 203 includes at least a communication unit 220 and the computing unit 221 (where FIG. 3 shows an example of one computing unit, but this is not limited in this application). The communication unit 220 may provide an efficient network transmission capability, and is configured to receive data input from an external device or send data output by the device. The computing unit 221 includes but is not limited to: a programmable gate array (field programmable gate array, FPGA), a data processing unit (data processing unit, DPU), a graphics processor (graphics processing unit, GPU), an application-specific integrated circuit (application-specific integrated circuit, ASIC), or a system on chip (system on chip, SoC). This embodiment is described by using the FPGA as an example. The FPGA has universality and programmability of a CPU, but is more dedicated, and can run efficiently on a network data packet, a storage request, or an analysis request. The FPGA distinguishes from the CPU by a high degree of parallelism (which requires processing of a large quantity of requests).

In this application, the working node or the central node may be deployed on at least one physical node. For example, one working node and one central node may be deployed on a same server. For another example, one central node and one working node may be separately deployed on two servers that are independent of each other. Details are not listed one by one herein. In addition, the storage node may also be an independent apparatus, for example, a storage server. It should be noted that the node may be deployed on a physical machine, or may be deployed on a virtual machine.

This is not limited in this application either.

During actual application, the system shown in FIG. 1 further includes a forwarding device, for example, a switch or a router. For ease of description, the following uses the switch as an example. The switch may be configured to forward data. In this embodiment, any two nodes, for example, a central node and a working node, a central node and a storage node, working nodes, and a working node and a storage node, may be interconnected to implement collaborative calculation.

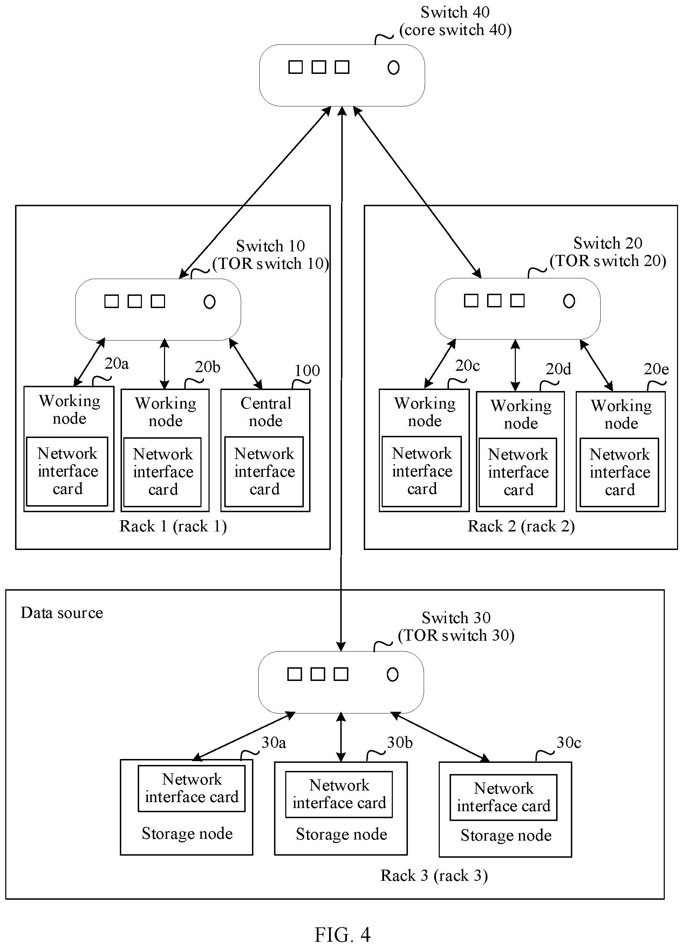

FIG. 4 is a schematic diagram of a physical architecture of a query system in an actual application scenario according to an embodiment of this application. In the query system shown in FIG. 4, a working node cluster further includes a working node 20d and a working node 20e in addition to the working node 20a, the working node 20b, and the working node 20c included in FIG. 3, a central node cluster includes only the central node 100, data sources include a storage node 30a, a storage node 30b, and a storage node 30c, and forwarding devices include a switch 10, a switch 20, a switch 30, and a switch 40.

As shown in FIG. 4, the central node, the working nodes, and the storage nodes are all physical machines that are independent of each other. The working node 20a, the working node 20b, the central node 100, and the switch 10 are installed on a rack 1 (rack 1). The working node 20c, the working node 20d, the working node 20e, and the switch 20 are installed on a rack 2. The storage node 30a, the storage node 30b, the storage node 30c, and the switch 30 are installed on a rack 3.

Nodes on a same rack may interact with each other through a switch on the rack. For example, on the rack 1, the central node 100 may exchange data with any other node on the rack 1 through the switch 10, for example, with the working node 20a. For example, in this embodiment of this application, data exchanged between the central node and the working node includes at least a packet header part and a data part. The packet header part includes a source IP address and a destination IP address, and the data part is data that needs to be transmitted. For example, a process in which the central node 100 sends data to the working node 20a may include: The central node 100 sends the data to the working node 20a, where a source IP address in the data is an IP address of the central node 100, and a destination IP address is an IP address of the working node 20a. Specifically, when the central node 100 sends the data, the data is first routed to the switch 10, and the switch 10 forwards the data to the working node 20a based on the destination IP carried in the data.

FIG. 4 further includes the switch 40, where the switch 40 is a core switch (core switch) in the system. Compared with the core switch, the switch 10, the switch 20, or the switch 30 may also be referred to as a top switch (TOR switch) in the respective rack. The core switch may be configured to implement data exchange between nodes on different racks.

For example, when a node on the rack 1 exchanges data with a node on the rack 3, data exchange may be implemented through the switch 10, the core switch 40, and the switch 30. For example, when the working node 20a sends data to the storage node 30a, a transmission path of the data is as follows: The data is first routed to the switch 10. The switch 10 checks that a destination IP address and an IP address of the switch 10 are not in a same network segment, and forwards the data to the core switch 40. The core switch 40 forwards the data to the switch 30 that is in a same network segment as the destination IP address. The switch 30 forwards the data to the storage node 30a corresponding to the destination IP address. An installation location of the switch 40 is not limited. For example, the switch 40 may be installed on any rack in FIG. 4.

In addition to a data forwarding function, the switch in this embodiment of this application further has a calculation and data processing capability, for example, is a programmable switch.

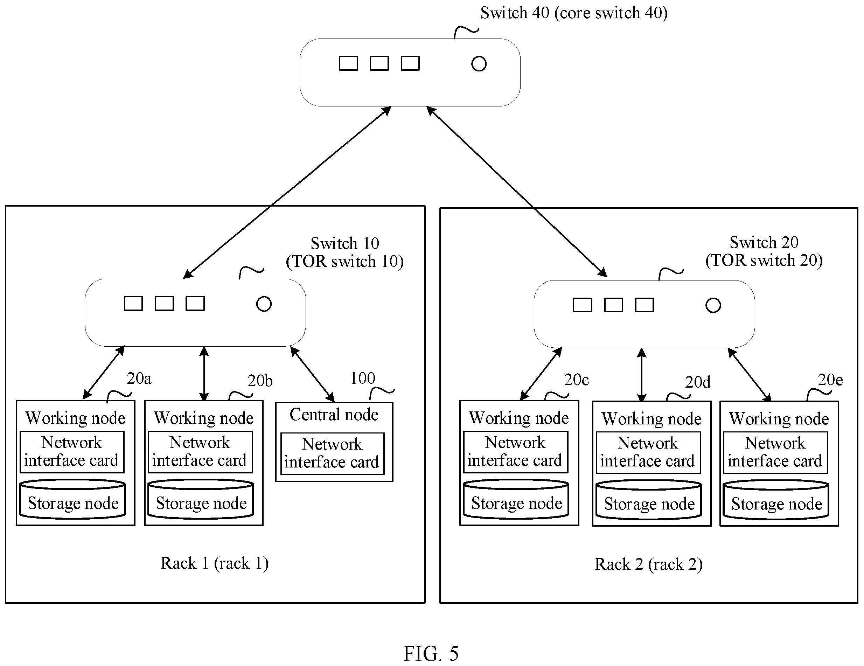

It should be noted that the system architecture shown in FIG. 4 is merely an example. FIG. 5 is a schematic diagram of another system architecture according to an embodiment of this application. A storage node may also be deployed on a working node. For example, data in a data source may be stored in a hard disk of the working node. The system architecture and a deployment form of each node are not limited in this embodiment of this application.

In general, to resolve the problem mentioned in the background, this application provides a data query method. A central node receives a query request sent by a client, and parses the query request into one or more tasks. Then, the central node may offload some of the tasks to a network device for processing. For example, the network device is a network interface card of a working node or a forwarding device. Compared with a manner of allocating the tasks to the working node for processing, this reduces a calculation amount of the working node and reduces a CPU load of the working node. Therefore, a data processing speed can be improved without increasing hardware resources of the working node.

The following specifically describes the data query method in embodiments of this application with reference to specific accompanying drawings and embodiments.

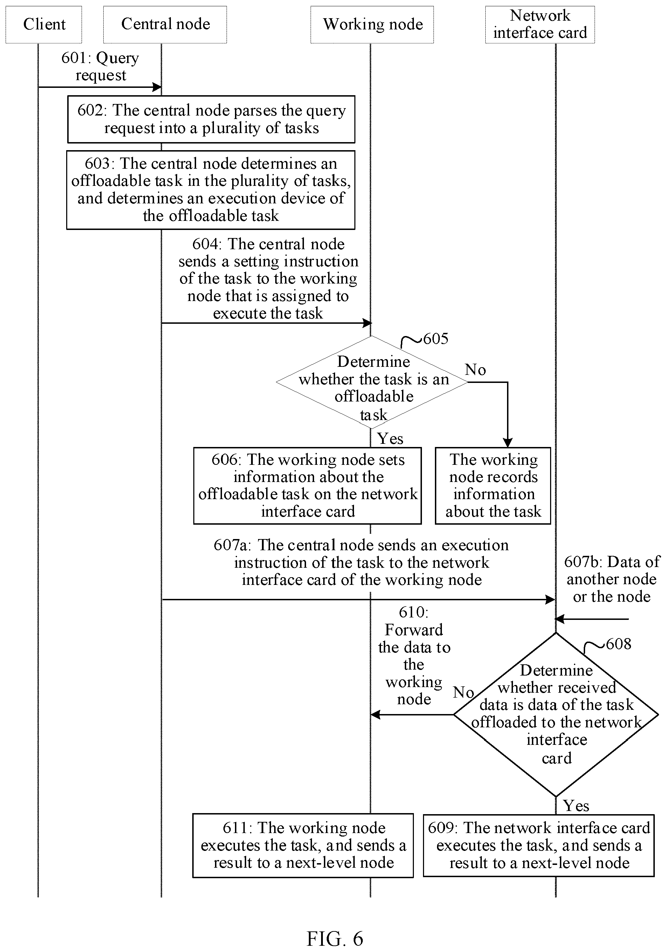

FIG. 6 is a schematic flowchart of a data query method according to an embodiment of this application. In this embodiment, a central node determines an offloadable task in a plurality of tasks, and indicates a working node to offload the offloadable task to a network interface card for processing. The method may be applied to the system architecture shown in FIG. 4 or FIG. 5. The method mainly includes the following steps.

Step 601: A client sends a query request to the central node. Correspondingly, the central node receives the query request sent by the client.

The query request is triggered by a user on the client. For example, a query system is an MPP SQL engine, and the query request may be an SQL statement. The following uses the SQL statement as an example to describe the query request. Actually, a statement of the query request is not limited in this embodiment of this application.

First, the following two lists are described. The two lists are original data requested to be queried in the query request triggered by the user. Table 1 (named factTb1) is a commodity sales record of a merchant, and is used to record transaction flows of the merchant. Table 2 (named dimTbl) is a commodity name table, and is used to record identifiers and commodity names of commodities sold by the merchant. It should be understood that Table 1 and Table 2 show only a part of data.

**Table 1 factTbl**

| Id (commodity identifier) | Sale (sales)/yuan | Data (date) |
|---|---|---|
| 1 | 100 | 2020.01.01 |
| 2 | 150 | 2020.01.01 |
| 1 | 100 | 2020.01.02 |
| 3 | 200 | 2020.01.02 |
| ··· | ··· | ··· |

**Table 2 dimTbl**

| Id (commodity identifier) | Name (product name) |
|---|---|
| 1 | Cup A |
| 2 | Cup B |
| 3 | Cup C |
| 4 | Cup D |
| ··· | ··· |

It is assumed that the query request is that the user needs to query total sales of each commodity in Table 2 on 2020/01/02 in Table 1. For example, an SQL statement corresponding to the query request is as follows:

```
            SELECT dimTbl.name, sum(factTbl .sale)
            FROM factTbl JOIN dimTbl
            ON factTbl.ID=dimTbl.ID
            WHERE factTbl .day='20200102'
            GROUP BY dimTbl.name.
```

Step 602: The central node parses the query request into one or more tasks.

In this embodiment, the query request may be split into the one or more tasks. Specifically, the task includes some or all of the following information: information about to-be-operated data, operator information, and an operation rule. The information about the to-be-operated data indicates the to-be-operated data, and the to-be-operated data is an operated object. The operator information includes an identifier of an operator, the identifier indicates the operator, and one operator represents one execution operation. The operation rule is a rule of the execution operation, and may also be understood as a rule of the operator. For example, a filter task may be obtained by parsing the foregoing SQL statement "WHERE *factTbl* .*day*='20200102‴. To-be-operated data in the filter task is Table 1 (*fαctTbl*), an operator identifier is an identifier of a filter (filter) operator, an execution operation represented by the filter operator is filtering, and a rule of the filter operator in the task is data=20200102.

The following describes some operators that may be used in this embodiment of this application.

### 1. Tablescan (sequential table scan) operator

The tablescan operator indicates a scan operation, and is used to read all rows on all pages of a table based on a storage sequence of the rows in a database.

### 2. Filter operator

The filter operator indicates a filter operation, and is used to perform filtering on a filter column in a table based on an operation rule (or a filter condition) to obtain a row that meets the filter condition. The filter column refers to one or more columns on which filtering needs to be performed. For example, if the filter condition is to filter out data with data=2020/01/02 in Table 1, the data column in Table 1 is the filter column. Specifically, when a task 1 is executed, filtering may be performed on each row based on a filter condition when each row in Table 1 is read, or filtering may be performed on a part of rows after the part of rows are read.

### 3. Join (table join) operator

The join operator indicates a table join operation, and is used to recombine two tables based on conditions of one or more columns. The join operator is usually used to filter data in a large table (a table with a large data volume, for example, Table 1) based on one or more data items in a small table (a table with a small data volume, for example, Table 2), and may also be used to combine data in the small table with data in the large table.

For example, a procedure of using the join operator includes: maintaining a Bloom filter (BloomFilter, BF) on a column (for example, the ID column in Table 2), specified by an ON clause, of the small table on which joining needs to be performed, and then scanning the large table. When the large table is scanned, matching is performed on the BF and a value of each scanned row in a column (for example, the ID column in Table 1) specified by an ON clause. If the value does not exist in the BF, the row is discarded. If the value exists, the row is reserved. The join operator may be used to combine some columns in the small table with some columns in the large table, for example, combine the name columns in Table 1 and Table 2 based on same ID values in Table 1 and Table 2.

Specifically, the join operator includes a broadcast join operator and a hash join operator. It is assumed that data on which joining needs to be performed includes Table 2. An operation procedure of the broadcast join operator is as follows: One working node reads the complete Table 2, and then broadcasts the complete Table 2 to each of other working nodes that execute the join operator. An operation procedure of the hash join operator may be as follows: A plurality of working nodes each read one or more slices of Table 2 (where the slices are described in detail below), and then send the read slices to other working nodes. In this way, each working node can obtain the complete Table 2 based on slices of Table 2 that are read by other working nodes, and then execute the join operator based on Table 2.

### 4. Group by (grouping) operator

The group by operator indicates a grouping operation, and is used to perform grouping based on a specific condition, for example, based on commodity names.

### 5. Aggregation operator

The aggregation operator indicates an aggregation operation, and mainly includes: a sum aggregation operator, a min aggregation operator, a max aggregation operator, a count aggregation operator, and an avg aggregation operator. The sum aggregation operator is used to sum up values that need to be aggregated, the min aggregation operator is used to maintain a minimum value in values that need to be aggregated, the max aggregation operator is used to maintain a maximum value in values that need to be aggregated, the count aggregation operator is used to count a quantity of values that need to be aggregated, and the avg aggregation operator is used to maintain an average value of cumulative sums in values that need to be aggregated. For example, an execution procedure of using the aggregation operator is as follows: First, grouping is performed based on a group by column, for example, group by dimTbl.name, in other words, grouping is performed based on the name column in Table 2, and then an operation such as sum, min, max, count, or avg is performed on grouped data. In this embodiment, the sum operation is performed.

### 6. Distinct (non-null and unique) operator

The distinct operator indicates a deduplication operation, and is used to select a non-null and unique column, in other words, to remove duplicated data. Specifically, deduplication is performed based on rows that have data (non-null) in the distinct column. For example, when a quantity of commodities included in Table 2 is determined, the name column in Table 2 is a distinct column, and a name column in each row is scanned row by row. If a name has not appeared before, the name is recorded. Subsequently, if the name appears again, the name is not repeatedly recorded. In other words, each commodity name in the name column is recorded only once. In this way, the quantity of commodities included in Table 2 can be obtained through statistics collection.

### 7. TopN operator

The TopN operator indicates an operation of maintaining N maximum values, and is specifically used to maintain N current maximum values. When a new value comes in, if the new value is greater than a smallest value in the N current maximum values, the smallest value in the N current maximum values is replaced by the new value.

The following continues to describe the task by using the SQL statement in step 601 as an example. It should be understood that the SQL statement is executed by performing operations (or steps) in a specific sequence, and a combination of these operations/steps used to execute the SQL statement is referred to as an execution plan. The execution plan may also indicate a complete execution process of the SQL statement. From a perspective of software, for example, after receiving the SQL statement sent by the client, the central node may perform syntax parsing on the SQL statement to generate the execution plan of the SQL statement, and then obtain the one or more tasks through parsing based on the execution plan. For example, one task may include one or more operations for executing the SQL statement, in other words, one task may be executed by using one or more operators.

For example, the execution plan of the SQL statement includes: (1) scanning Table 2 to read all rows in Table 2; (2) scanning Table 1 to read all rows in Table 1; (3) filtering out data of rows with dates of 2020/01/02 in Table 1; (4) filtering out rows, in the ID column in Table 1, with ID values the same as those in Table 2, and combining the rows with dates of 2020/01/02 in Table 1 with the name column in Table 2 based on the same ID values; (5) performing grouping on names based on row data obtained after combination, to obtain a plurality of groups of commodities, and calculating total sales of each group of commodities.

Further, with reference to a working node to which the tasks are allocated, the execution plan may be divided into a plurality of stages (stage), and one stage may include one or more tasks. For example, the stages may be obtained through division based on whether nodes need to interact with each other, and tasks included in a same stage do not need to depend on a result of another node.

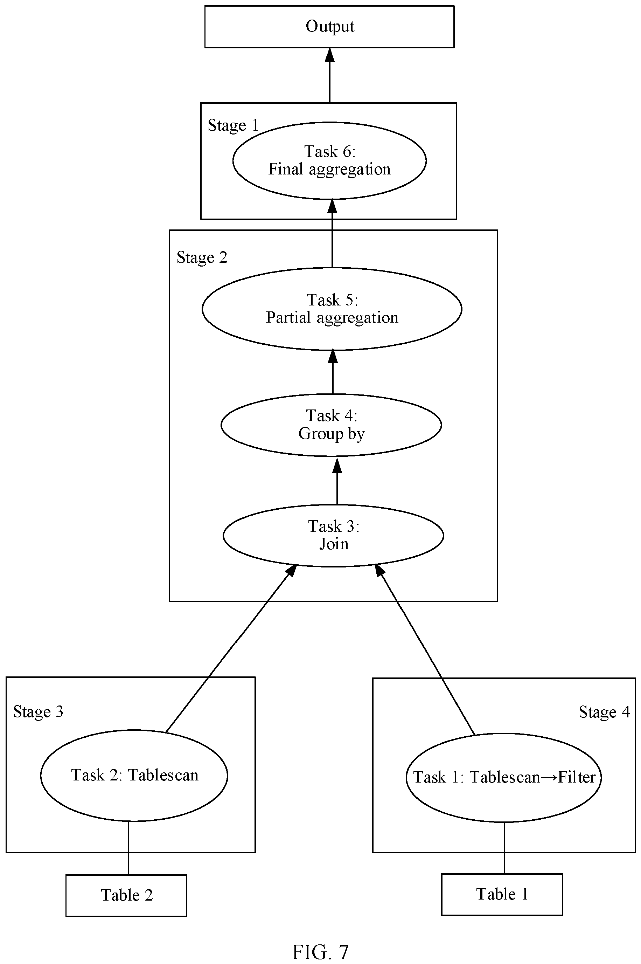

FIG. 7 is a schematic diagram of an execution plan generated by parsing the SQL statement. After the user inputs a query statement, the execution plan shown in FIG. 7 may be generated. Specifically, the user may input the query statement in a query command input area (not shown in FIG. 7) on a data query interface of the client. As shown in FIG. 7, the execution plan may be displayed to the user by using a display interface of the central node or the client. The execution plan may be directly displayed to the user after the user inputs a query instruction. Alternatively, when the user needs to view the execution plan, the user inputs an instruction for displaying the execution plan, and then the execution plan is displayed to the user by using the interface. Further, the execution plan further displays an execution device of each task, for example, a network interface card, a working node, a router, or a switch. The execution plan may be displayed simultaneously with the task, or the execution device may be displayed when the user clicks the task. An interface for inputting the query instruction by the user and the interface for displaying the execution plan may be a same interface, or may be different interfaces.

As shown in FIG. 7, the execution plan includes a stage 1, a stage 2, a stage 3, and a stage 4. The stage 3 and the stage 4 are in a parallel relationship and may be executed synchronously. The stage 2 is a next stage of the stage 3 (or the stage 4), and correspondingly, the stage 3 (or the stage 4) is a previous stage of the stage 2. The stage 1 is a next stage of the stage 2, and correspondingly, the stage 1 is a previous stage of the stage 2. The rest may be deduced by analogy. The following tasks may be obtained through splitting based on the execution plan of the SQL statement.

Task 1: Scan Table 1 and filter out the data of the rows with dates of 2020/01/02 in Table 1. The task 1 may be completed by using the tablescan operator and the filter operator. The tablescan operator is used to perform a scan operation. The filter operator is used to perform a filter operation. Table 1 is to-be-operated data, and a filter condition is data with data=2020/01/02 in the data column of Table 1.

Task 2: Read Table 2. The task 2 may be completed by using the tablescan operator.

Task 3: Join Table 1 and Table 2, to be specific, execute the task 3 to filter out, from the rows with dates of 2020/01/02 in Table 1, rows with ID values in the ID column the same as those in Table 2, and combine the rows with the name column in Table 2 based on the same ID values. The task 3 may be completed by using the join operator.

Task 4: is a grouping task, to be specific, perform grouping on commodity names based on a result obtained through the task 3. The task 4 may be completed by using the group by (grouping) operator.

Task 5: is partial aggregation (partial aggregation), to be specific, sum up sales of each group of commodities based on a grouping result of the task 4, to obtain total sales of each group of commodities. The task 5 may be completed by using the aggregation (aggregation) operator. It should be understood that for each working node, one or more slices (where the slices are described in detail below, and are not described in detail herein) in Table 1 are allocated for processing. To be specific, each working node that executes the task 5 summarizes sales of a group of commodities based on only a part of data in Table 1. Therefore, the task 5 may also be understood as partial aggregation.

Task 6: is final aggregation (final aggregation), to be specific, determine a final query result based on all partial aggregation results. In the foregoing example, to-be-operated data is a result of executing the task 5 by each working node to which the task 5 is allocated, an execution operation is summation, and an execution rule is to perform summation on sales of a same commodity based on the result of executing the task 5 by each working node that executes the task 5, to obtain the final query result.

Still refer to FIG. 7. For example, a logical relationship between the tasks is as follows: The task 3 is a next task of the task 1 and the task 2, and the task 1 and the task 2 each are a previous task of the task 3. The task 4 is a next task of the task 3, and correspondingly, the task 3 is a previous task of the task 4. In other words, output data of the task 1 and the task 2 is input data of the task 3, and output data of the task 3 is input data of the task 4. The rest may be deduced by analogy. Correspondingly, a node that executes a next task is a next-level node of a current node. For example, a node that executes the task 3 is a next-level node of a node that executes the task 1. The rest may be deduced by analogy.

The following describes the tasks in detail.

In this embodiment of this application, different tasks have different task identifiers (request ID). A task identifier is used to uniquely identify a task. In a plurality of tasks that belong to a same query request, task identifiers of the tasks are different. For an execution device of the task, input data is data to be calculated by the task, and may be identified based on the task identifier. Specifically, data including the task identifier of the task is the input data. A result of executing the task based on the input data is output data of the task, and a task identifier of the output data is a task identifier of a next task. Specifically, a data packet carrying the output data also carries the task identifier of the next task.

A same task may be executed by using one or more operators. When a plurality of operators need to be used for execution, an arrangement sequence of the operators in the task indicates an execution sequence of the operators. An execution device of the task performs corresponding operations according to the sequence of the operators. A task identifier does not need to be used between different operators to transfer execution results of the operators. For an execution result of a current operator, the execution device may directly process the execution result by using a next operator. For example, in the task 1, the tablescan operator is followed by the filter operator. In this case, an execution device of the task 1 first reads Table 1, and then uses the filter operator to filter Table 1 based on the filter condition of the filter operator. An execution result of the last operator in the task is output data of the task.

Step 603: The central node determines an offloadable task in the one or more tasks, and determines an execution device of the offloadable task.

To implement parallel processing, subsequently, the central node generates a task scheduling plan, and allocates the tasks to a plurality of execution devices, so that the plurality of execution devices execute the one or more tasks in parallel. For example, the task 1 is allocated to a plurality of working nodes, and each working node reads one or more slices in Table 1. A slice refers to a slice, with an equal size, obtained through division of to-be-queried data. For example, Table 1 includes 10000 rows, and every 2000 rows are sequentially classified into one slice. In this case, Table 1 may be divided into five slices. This is so-called parallel processing, and improves task execution efficiency. In this embodiment of this application, tasks include an offloadable task and an unoffloadable task, and execution devices of different types of tasks may be different. For example, the unoffloadable task may be processed by a working node, and the offloadable task may be offloaded to a network device for processing. For example, the network device is a network interface card of the working node. In this way, a workload of the working node is reduced, and a calculation amount and a load of a CPU of the working node are also reduced.

For example, in this embodiment, the offloadable task may be a task including an offloadable operator, and the offloadable operator may be preset or predetermined in a protocol. The offloadable operator includes but is not limited to: the tablescan operator, the filter operator, the join operator, the aggregation operator, the TopN operator, the distinct operator, and the like. It should be noted that the foregoing offloadable operators are merely examples, and a type of the offloadable operator or a quantity of offloadable operators is not limited in this embodiment of this application. In addition, if a task includes a plurality of operators, and a part of the operators are not offloadable operators, the task may be defined as an unoffloadable task. During actual application, a task that needs to be executed by using an unoffloadable operator may be defined as an independent task. In other words, all operators involved in the offloadable task in this embodiment are offloadable operators.

For example, based on the foregoing offloadable operators, for the task 1 to the task 6, the task 3 includes an offloadable operator. Therefore, the task 1 is an offloadable task, and the execution device of the task 1 may be a network interface card of the working node. An operator used in the task 4 is an unoffloadable operator. Therefore, the task 4 is an unoffloadable task, and an execution device of the task 4 may be a working node.

The following describes how to generate the slice.

It should be understood that not all tasks need to obtain data from a data source, in other words, not all tasks need to generate slice information. For a task that requires table reading, for example, a task that needs to use the tablescan operator, when allocating an execution device to this type of task, the central node may further allocate a read slice to each execution device. Table 1 is used as an example. A process of generating slice information of Table 1 may be as follows: The central node obtains storage information of Table 1 from the data source, for example, a storage node on which Table 1 is stored, a size of data of Table 1 stored on each storage node, a storage location of the data of Table 1 on each storage node, and an IP address of the storage node. The central node generates the slice information of Table 1 based on the storage information. Slice information of each slice includes information such as an IP address of a storage node on which the slice is located and a storage location of the slice.

For example, it is assumed that Table 1 includes 10000 rows, the 1^{st} row to the 4000^{th} row in Table 1 are stored on a storage node 1, the 4001^{st} row to the 8000^{th} row are stored on a storage node 2, and the 8001^{st} row to the 10000^{th} row are stored on a storage node 3. It is assumed that each slice is 2000 rows. In this case, Table 1 may be divided into five slices, for example, a slice 1 to a slice 5. Correspondingly, slice information of the slice 1 includes but is not limited to some or all of the following: an identifier of the slice 1, an IP address of the storage node 1, and a storage location (address space, of the storage node 1, storing the 1^{st} row to the 2000^{th} row of Table 1, where for example, the storage location may be represented as a start address of the address space and a length of the 1^{st} row to the 2000^{th} row). Slice information of a slice 2 includes but is not limited to some or all of the following: an identifier of the slice 2, an IP address of the storage node 1, and a storage location (address space, of the storage node 1, storing the 2001^{st} row to the 4000^{th} row of Table 1, where for example, the storage location may be represented as a start address of the address space and a length of the 2000^{th} row to the 4000^{th} row). The rest may be deduced by analogy. Details are not described herein one by one. Certainly, the foregoing descriptions are merely an example, and Table 1 may alternatively be stored on only one storage node. This is not limited in this embodiment of this application.

The following describes how to generate the task scheduling plan.

For example, the central node generates the task scheduling plan based on information about the plurality of tasks (or the execution plan) included in the SQL, information about the working node, slice information, and the like.

The information about the task includes a task identifier, or the information about the task includes a task identifier, an offloading flag, and the like. The offloading flag indicates whether the task corresponding to the task identifier carried in a first setting instruction is an offloadable task. For example, the offloading flag may be 1 bit. For example, if a bit value of the bit is 1, it indicates that the task is an offloadable task; if a bit value is 0, it indicates that the task is an unoffloadable task. For another example, the offloading flag is a fixed value, an offloadable task carries the offloading flag, and an unoffloadable task does not carry the offloading flag.

The information about the working node includes information such as a quantity of working nodes, an address (for example, an IP address or a port), and an identifier of the working node. The identifier of the working node may be globally unique. "Globally unique" means that the working node indicated by the identifier is unique in the query system, and each working node and the central node know a meaning of the identifier. The identifier may be the IP address, a device identifier, or a device name of the working node, or a unique identifier generated by the central node for the working node in the query system, or the like. Information about a switch includes information such as an address (for example, an IP address or a port) of the switch, information indicating whether the switch has a capability of processing an offloadable task, and an identifier of the switch. For the slice information, refer to the foregoing descriptions. Details are not described herein again.

Specifically, the task scheduling plan includes some or all of the following: the task identifier, the offloading flag, the identifier of the working node to which the task is allocated, the slice information corresponding to the task, and the like. Table 3 is a specific example of a task scheduling plan provided for the SQL statement in this embodiment of this application. Herein, an example in which all tasks are allocated to working nodes for processing is used. It is assumed that reading the complete Table 2 is allocated to a working node 20a, and subsequently, the working node 20a broadcasts Table 2 to each of other working nodes.

**Table 3**

| Task identifier | Offloadable or not | Execution device | Slice information |
|---|---|---|---|
| Task 1 | Yes | Network interface card of the working node 20a | Slice 1 |
| | | Network interface card of a working node 20b | Slice 2 |
| | | Network interface card of a working node 20c | Slice 3 |
| | | Network interface card of a working node 20d | Slice 4 |
| | | Network interface card of a working node 20e | Slice 5 |
| Task 2 | Yes | Network interface card of the working node 20a | Storage information of Table 2 |
| Task 3 | Yes | Network interface card of the working node 20a to network interface card of the working node 20e | NULL |
| Task 4 | No | Working node 20a to working node 20e | NULL |
| Task 5 | Yes | Network interface card of the working node 20a to network interface card of the working node 20e | NULL |
| Task 6 | Yes | Network interface card of the working node 20a | NULL |

For example, it can be learned based on Table 3 that the central node allocates tasks 1 to 4 to working nodes 20a to 20e, and enables the working node 20a to read the slice 1, the working node 20b to read the slice 2, the working node 20c to read the slice 3, the working node 20d to read the slice 4, and the working node 20e to read the slice 5. In this way, when separately executing the task 1, the working nodes can read parts of rows in Table 1 in parallel without interfering with each other, and execute a subsequent task based on read data until partial aggregation results are obtained in the task 5. Finally, a node (the working node 20a) that executes the task 6 summarizes the partial aggregation results of the working nodes 20a to 20e, to obtain a final query result.

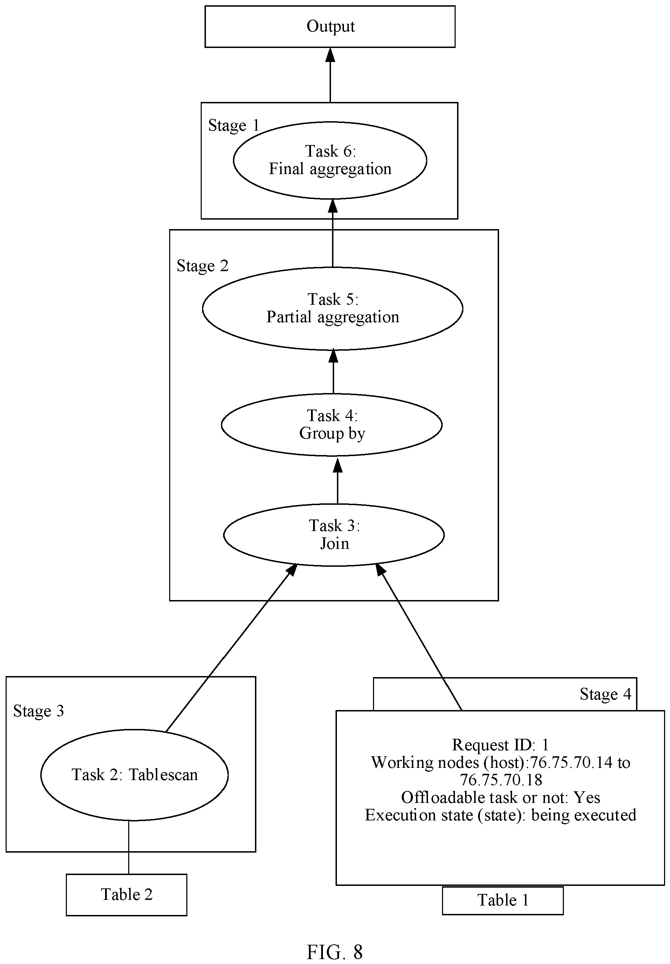

In an implementable manner, in a process of executing the query request, the user may also view an execution progress of the query request at any time. As shown in FIG. 8, after any task in the execution plan is selected, specific execution information of the current task may be displayed. For example, the information includes a node to which the task is allocated, information indicating whether the task is an offloadable task, an execution device of the offloadable task, information about the node or the execution device (where it is assumed that IP addresses of the working node 20a to the working node 20e are separately 76.75.70.14 to 76.75.70.18), and an execution state (for example, a state indicating that execution is not started, a state indicating that execution is being performed, or a state indicating that execution is completed). It should be noted that interfaces shown in FIG. 7 and FIG. 8 are merely examples, and may alternatively be displayed in another manner. This is not limited in this embodiment of this application.

Step 604: The central node sends a first setting instruction of the offloadable task to a working node, where a network interface card of the working node is set as an execution device of the offloadable task.

The central node sends, based on the task scheduling plan, a first setting instruction of each task to a working node that is set to process the task.

For example, the central node may generate, based on the task scheduling plan, a first setting instruction for each working node at a granularity of a task, and send the first setting instruction of the offloadable task to the working node. Correspondingly, the working node receives the first setting instruction sent by the central node. For example, the first setting instruction includes but is not limited to some or all of the following information: a task identifier, an offloading flag, and operator information. Table 4 shows an example of a format of the first setting instruction provided in this embodiment.

**Table 4**

| | | |
|---|---|---|
| Header | Data part | |
| Request ID (task identifier) | Flags (offloading flag) | Payload (operator information) |

The operator information includes but is not limited to some or all of the following:
an operator identifier, an execution rule of an operator, input information of the operator, and output information of the operator. The input information of the operator indicates input data required for executing the task and information about a node in which the input data is located, for example, address information, storage information, and a table name. For example, the slice information of Table 1 is input information of the task 1. The output information of the operator includes a task identifier of a next task of the task corresponding to the request ID and information about a next-level node.

Similarly, a first setting instruction of an unoffloadable task may be similar to the first setting instruction of the offloadable task. A difference lies in that the offloading flag of the offloadable task indicates that the task is an offloadable task, and an offloading flag of the unoffloadable task indicates that the task is an unoffloadable task. Alternatively, only the first setting instruction of the offloadable task carries the offloading flag, and the first setting instruction of the unoffloadable task does not carry an offloading flag, so that the offloadable task can be distinguished from the unoffloadable task.

With reference to Table 5, the working node 20a is used as an example. Table 5 lists a specific example of a first setting instruction of each task sent to the working node 20a. For execution rules of operators, refer to the foregoing descriptions. Details are not described again in Table 5. In addition, it is assumed that Flags being 1 indicates an offloadable task, and Flags being 0 indicates an unoffloadable task.

**Table 5**

| Task | First setting instruction | | |
|---|---|---|---|
| | Header | | Data part |
| | Request ID (task identifier) | Flags (offloading flag) | Payload (operator information) |
| Task 1 | Request ID 1 | 1 | Operator identifier: tablescan→filter; |
| | | | filter rule: XXX; |
| | | | input: slice information of the slice 1; |
| | | | output: request ID 3 |
| Task 2 | Request ID 2 | 1 | Operator identifier: tablescan; |
| | | | input: storage information of Table 2; |
| | | | output: request ID 4, and IP addresses of the working node 20b to the working node 20e |
| Task 3 | Request ID 3 | 1 | Operator identifier: join; |
| | | | execution rule: XXX; |
| | | | output: request ID 5 |
| Task 4 | Request ID 4 | 0 | Operator identifier: group by; |
| | | | group by rule: XXX; |
| | | | output: request ID 5 |
| Task 5 | Request ID 5 | 1 | Operator identifier: partial aggregation; |
| | | | aggregation rule: XXX; |
| | | | output: request ID 6, and IP address of the working node 20a |
| Task 6 | Request ID 6 | 1 | Operator identifier: final aggregation; |
| | | | execution rule: XXX; |
| | | | input: information about the working node 20a to the working node 20e |

It should be noted that the format of the first setting instruction is merely an example. Actually, the first setting instruction may include more or less information than that in Table 5. This is not limited in this embodiment of this application. For example, the central node may alternatively not determine whether a task is an offloadable task, and each working node determines whether the task is an offloadable task based on a preset operator. Correspondingly, a first setting instruction may not include an offloading flag. For another example, the first setting insturction may further include padding data (Magic bytes), and the padding data may be data of a known bit, for example, 0 or 1, so that a length of the first setting instruction is enabled to be a preset length.

Step 605: The working node determines whether a received task is an offloadable task. If yes, the wording node performs step 606. Otherwise, the working node processes the task.

The following uses one working node as an example for description.

With reference to Table 5, in an implementable manner, for any received first setting instruction, the working node may determine, based on an offloading flag carried in the first setting instruction, whether a task is an offloadable task. If the task is an offloadable task, the working node sets information about the offloadable task in a network interface card, and the network interface card subsequently processes the offloadable task. In another implementable manner, the working node may also distinguish between an offloadable task and an unoffloadable task based on whether the task carries an offloading flag. Certainly, an example in which the central node identifies the offloadable task is used herein. If the central node does not identify the offloadable task, the first setting instruction does not carry the offloading flag regardless of whether the task is an offloadable task or an unoffloadable task. In this case, the working node may identify the offloadable task based on a preset offloadable operator. This is not limited in this embodiment of this application.

Step 606: The working node offloads the offloadable task to the network interface card of the node, to be specific, sets information about the offloadable task in the network interface card.

Specifically, when setting the information about the offloadable task in the network interface card, the working node may send a second setting instruction of the task to the network interface card, and the network interface card obtains and records the information about the offloadable task based on the second setting instruction.

For example, the second setting instruction may include a header and a data part. The header may include a control instruction and the task identifier, and the data part may include the operator information of the task. For example, Table 6 shows a format of the second setting instruction provided in this embodiment.

**Table 6**

| | | |
|---|---|---|
| Second setting instruction | | |
| Header | | Data part |
| Command (control command) | Request ID (task identifier) | Payload (load) |

The command indicates a command type, in other words, indicates an operation to be performed. For example, the command may be but is not limited to the following types: an offloading command (init command), a read command (read command), and an end command (end command). The offloading command indicates to offload the task corresponding to the request ID. An execution instruction indicates to start a tablescan task and read input data of the task corresponding to the request ID. Usually, reading to-be-queried data is a start point for executing an SQL. Therefore, the command may be referred to as a read command or an execution instruction. The end command may indicate the execution device to release a resource used to process the task corresponding to the request ID after execution of the task is completed, or may be understood as indicating that the task ends and a resource allocated to the task may be released. For ease of description, in the following descriptions, a second setting instruction in which a command is an init command is referred to as an offloading command, a second setting instruction in which a command is a read command is referred to as an execution instruction, and a second setting instruction in which a command is an end command is referred to as an end command. The payload includes the operator information of the task. The operator information has been described before, and is not described herein again.

The following describes a procedure in which the working node sets the information about the offloadable task on the network interface card.

The task 1 is used as an example. After determining that the task 1 is an offloadable task, the working node 20a sends an offloading command of the task 1 to the network interface card of the working node 20a, as shown in Table 7 below.

**Table 7**

| Command | Request ID | Payload |
|---|---|---|
| init command | 1 | Operator identifier: tablescan operator; input: slice information of the slice 1; |
| | | operator identifier: filter operator; input: slice 1; execution rule: data=2020/01/02; output: request ID 2 |

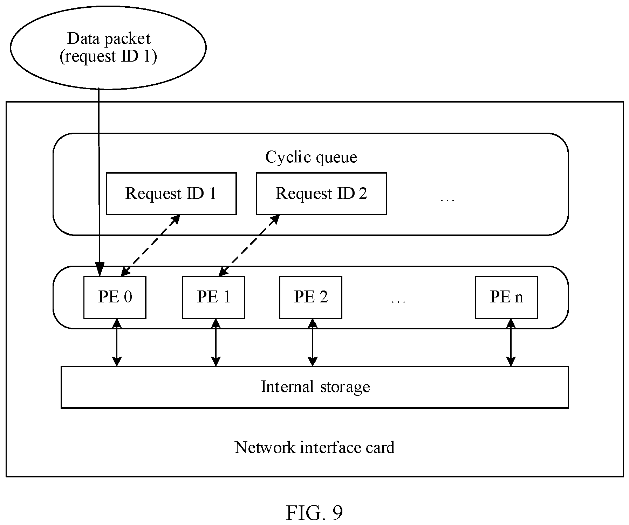

For example, after receiving the offloading command, the network interface card first checks a packet header of the offloading command and views the packet header. If the offloading command an init command, the network interface card determines that the task 1 (whose request ID is 1) is an offloadable task, and allocates (or reserves) a network interface card resource to the task 1, where the network interface card resource is configured to process the task 1. The following describes a network interface card resource. As shown in FIG. 9, in this embodiment, network interface card resources (for example, including computing units) and internal storage resources that are used to process offloadable tasks may be divided into a plurality of parts, each part may be referred to as a processing engine (processing engine, PE), and one PE may be configured to process one offloadable task.

Still refer to FIG. 9. The task 1 is used as an example. Setting the information about the offloadable task in the network interface card may include the following process: After the network interface card receives the offloading command of the task 1, if there is an idle PE, the network interface card allocates the task 1 to an idle PE, and the PE records the request ID, operator information, and the like of the task 1. Correspondingly, the network interface card records a first correspondence between the PE and the offloadable task processed by the PE, to record the task that is allocated to the PE for execution. Specifically, the first correspondence includes a PE identifier and a request ID of the offloadable task. Subsequently, after receiving a data packet including the same request ID, the network interface card may determine, based on the first correspondence, the PE corresponding to the request ID, and route the data packet to the corresponding PE for processing. For example, when the task 1 is executed, the network interface card of the working node 20a sends, to a storage node corresponding to the slice 1, a read request used to read the slice 1, where the read request carries the request ID of the task 1. The storage node sends a feedback data packet of the task 1 to the network interface card, and the feedback data packet also carries the request ID of the task 1. In this way, the network interface card may determine, based on the first correspondence, a PE corresponding to the data packet returned by the storage node, and route the data packet to the determined PE. The PE processes the data packet by using a corresponding operator based on the recorded operator information.

It should be understood that a quantity of PEs is limited. For example, a cyclic queue may be further set in the network interface card. In an implementable manner, a quantity of offloadable tasks that can be placed in the cyclic queue may be equal to the quantity of PEs. When a new offloadable task arrives and the cyclic queue is not full, the offloadable task is placed in the cyclic queue, and an idle PE is allocated to the offloadable task. When the cyclic queue is full, the network interface card sends a response to a device that sends an offloading command. The response indicates that the network interface card cannot process the offloadable task, and may further include a reason why the network interface card cannot process the task, for example, the network interface card does not have a resource for processing the offloadable task. For example, after a processor of the working node 20a sends the offloading command of the task 1 to the local network interface card, a cyclic queue is full. When determining that no idle PE is available for processing the task, the network interface card sends a response to the processor of the working node 20a, to indicate that the network interface card cannot execute the task 1. Subsequently, the working node 20a may execute the task 1, to reduce a delay and improve a task processing speed. In another possible implementation, the network interface card places all received offloadable tasks in the cyclic queue, and all the offloadable tasks may be placed in the cyclic queue. If a quantity of offloadable tasks is greater than the quantity of PEs, when an idle PE appears, an offloadable task that is not allocated to a PE is selected from the cyclic queue to be allocated to the idle PE.

The foregoing uses the task 1 as an example to describe a process of offloading the offloadable task to the network interface card. Similarly, the working node 20a offloads the task 2, the task 3, the task 5, and the task 6 to the network interface card of the working node 20a in a same manner. It should be understood that an offloading procedure of another working node is similar to that of the working node 20a. Details are not described herein again.

Step 607a: The central node sends an execution instruction to the network interface card of the working node. Correspondingly, the network interface card of the working node receives the execution instruction.

In this application, some tasks may be executed only after execution instructions are received. For example, the tasks may be tasks that need to use the tablescan operator, that is, the task 1 and the task 2 in the foregoing example. For such a task, the central node may send an execution instruction of the task to trigger an execution device to execute the task.

For example, the execution instruction herein may be the foregoing read command, and the central node sends read commands of the task 1 and the task 2 to the working nodes. In a first implementation, one read command may carry request IDs of a plurality of tasks. For example, the request IDs of the read command carry the request ID of the task 1 and the request ID of the task 2. In other words, the read commands of the task 2 and the task 1 may be the same. In another implementation, a read command of each task is independent. For example, a read command of the task 1 carries only the request ID of the task 1, and similarly, a read command of the task 2 carries only the request ID of the task 2. This is not limited in this embodiment of this application.

For ease of description, the second implementation is used as an example for description below. The read command of the task 1 is used as an example. Table 8 is a specific example of a read command provided for the task 1 in this embodiment of this application.

**Table 8**

| Command | Request ID | Payload |
|---|---|---|
| Read command | 1 | Slice information of the slice 1 |

It should be noted that Table 8 is merely an example. If the offloading command of the task 1 carries slice information of the task 1, the read command of the task 1 may not repeatedly carry the slice information of the task 1, to reduce an amount of data that needs to be transmitted, avoid repeated transmission, and save network resources. Alternatively, regardless of whether the offloading command includes the slice information, the read command may carry the slice information, and the execution device uses the slice information in the read command, to dynamically and flexibly adjust the slice information and improve a data hit rate.

Optionally, after setting the information about the task based on the first setting instruction, the working node may send a complete response to the central node. After receiving the complete response, the central node sends the execution instruction. Alternatively, the central node may directly send the execution instruction. After setting the information about the task based on the first setting instruction, the working node directly starts to execute the corresponding task, to implement automatic execution of a subsequent task.

Step 607b: The network interface card of the working node receives data of the working node or another node. Similarly, the another node herein may be a working node, a central node, a storage node, or a forwarding device other than the node. For example, for the working node 20a, the network interface card receives a result obtained by executing the task 5 by another working node. It should be noted that step 607b is an optional step, and is not a mandatory step, and a time sequence of step 607b and step 607a is not strictly limited.

Step 608: The network interface card determines whether received data belongs to the task offloaded to the network interface card. If yes, step 609 is performed. Otherwise, step 610 is performed.

Subsequently, after the task is started to be executed, the network interface card monitors whether the received data is input data of the offloadable task that is set to be processed by the network interface card. If yes, the network interface card performs an operation on the data. Otherwise, the network interface card forwards the data to the working node. The data herein includes various setting instructions and to-be-operated data. With reference to step 607a, when receiving the execution instruction, the network interface card determines whether the received execution instruction belongs to the task offloaded to the network interface card. If yes, the network interface card starts to execute the corresponding task. Otherwise, the network interface card sends the execution instruction to the working node, and the working node starts to execute the corresponding task.

Similarly, an execution device of each task monitors received data, and determines whether the data is data of the task offloaded to the network interface card. For example, if the data includes a request ID of the task of the network interface card, the data is data of the task. If the data is an execution instruction, the network interface card executes the execution instruction. If the data is input data of the task, the network interface card processes the data by using an operator and an execution rule of the task. If the data is not the execution instruction or the input data of the task, the network interface card determines that the data does not belong to the task, and sends the data to a working node for processing.

Step 609: The network interface card executes the corresponding task, and returns a result to a next-level node of the execution plan or an execution device of a next task.

Step 610: The network interface card sends the data to the working node.

Step 611: The working node executes a corresponding task based on the data, and returns a result to an execution device of a next task or a next-level node of the execution plan.

It should be noted that step 608 to step 611 may be steps that are cyclically performed until a final query result, that is, a result of the task 6, is obtained.

For example, with reference to Table 3, the working node 20a is used as an example. It is assumed that the working node 20a offloads the task 1, the task 2, the task 3, the task 5, and the task 6 to a PE 0 to a PE 5 of the local network interface card for processing, that is, a first correspondence is that the PE 0 corresponds to the task 1, a PE 1 corresponds to the task 2, ..., and a PE 4 corresponds to the task 6. The task 4 is processed by the working node 20a. The following describes a procedure in which the working node 20a executes the task 1 to the task 6.

After receiving an execution instruction of the task 1, the network interface card of the working node 20a determines, based on the first correspondence, a PE corresponding to the task 1, that is, the PE 0, and routes the execution instruction of the task 1 to the PE 0. The PE 0 executes the task 1, to be specific, sends a read request to a corresponding storage node based on the slice information of the task 1 (the slice 1). For example, the read request may be a read request in an existing implementation mechanism, or may be a read request in another format. Specifically, the PE 0 may forward the read request of the task 1 to the storage node corresponding to the slice 1. After receiving the read command, the storage node returns data of the slice 1 corresponding to the task 1 to the network interface card. As described above, the data returned by the storage node includes a request ID that is the same as that in the read request. After receiving a data packet of the task 1 from the storage node 1, the network interface card sends the data packet to the corresponding PE 0 based on the first correspondence. After receiving the data packet, the PE 0 determines, based on the operator information of the task 1, that a next operator of the tablescan operator is the filter operator, and filters, based on the execution rule (data=2020/01/02) of the filter operator, a filter column (a data column) in the slice 1 carried in the data packet.

Specifically, a filtering result may be represented by using a bitmap corresponding to the filter column. Each bit in the bitmap sequentially corresponds to each row in the read slice, and different bit values of the bit indicate whether the row meets a filter condition. Refer to the following Table 9. It is assumed that Table 9 is a part of data in the slice 1 in Table 1.

**Table 9**

| Id | Sale | Data |
|---|---|---|
| ··· | ··· | 2020.01.02 |
| ··· | ··· | 2020.01.01 |
| ··· | ··· | 2020.01.01 |
| ··· | ··· | 2020.01.01 |
| ··· | ··· | 2020.01.02 |

The PE 0 determines whether the read data column is a filter column. If the data column is a filter column, the PE 0 filters data in each row of the read filter column based on the filter condition. It may be determined based on the filter condition data=2020/01/02 of the task 1 that the data column is a filter column. It is assumed that a bit value 1 indicates that the filter condition is met, and a bit value 0 indicates that the filter condition is not met. In this case, a bitmap corresponding to the filter column shown in Table 9 is 10001.

The network interface card may further store a second correspondence between a request ID and a bitmap. For example, if the request ID is 1, the bitmap is 10001. Then, it may be quickly determined, based on the bitmap of the task 1, that only the first row and the fifth row in Table 9 meet the condition. In this way, filtered data may be sent to a next-level node, so that an amount of transmitted data can be reduced. In addition, the working node does not need to execute the offloadable task, so that a running amount and processing time of the working node are also reduced.

For output data of the task 1, the output data carries a request ID of a next task of the task 1, that is, the request ID 3, and the data obtained after filtering in the task 1. The network interface card continues to determine, based on the first correspondence, a PE corresponding to the request ID 3, that is, the PE 2, and routes the output data of the task 1 to the PE 2.

Optionally, after execution of the task is completed, the network interface card may send indication information to the working node, where the indication information indicates that the execution of the task is completed. After receiving the indication information, the working node may send an end command to the network interface card, so that the network interface card releases a corresponding network interface card resource (for example, a PE), an internal storage resource, and the like that are used to process the offloadable task.

The following uses an end command of the task 1 as an example. Table 10 is a specific example of the end command provided for the task 1 in this embodiment of this application.

**Table 10**

| Command | Request ID | Payload |
|---|---|---|
| End command | 1 | NULL |

For example, after execution of the task 1 on the network interface card is completed, the working node 20a sends the end command shown in Table 10 to the network interface card. Correspondingly, the network interface card receives the end command, and releases the PE, an internal storage resource, and the like that are used to process the task 1. The released resources may be used to process another offloadable task offloaded to the network interface card. Alternatively, the network interface card may autonomously determine when to release the PE. For example, when sending the last data packet of the task 1 to the network interface card, the storage node includes, in the last data packet, an identifier indicating that the data packet is the last data packet. After determining that the PE has processed the last data packet of the task 1, the network interface card releases a corresponding resource used to process the task 1. For similar parts, details are not described again below.

Subsequently, similarly, the central node sends an execution instruction of the task 2 to the network interface card of the working node 20a. The network interface card determines, based on the first correspondence, a PE corresponding to the request ID 2, that is, the PE 1. The PE 1 may obtain the complete Table 2 based on the first setting instruction of the task 2 shown in Table 5 and the storage information (including information such as an IP address of a storage node and a storage location) of Table 2, and send the read Table 2 to the working node 20b, the working node 20c, the working node 20d, and the working node 20e. In addition, Table 2 is routed to a PE 2 corresponding to a next task of the task 2, that is, the task 3.

When all input data of the task 3 arrives, the PE 2 executes the task 3. To be specific, the PE 2 processes output data of the task 1 and the task 2 based on the operator and the execution rule that correspond to the task 3, to obtain output data of the task 3.

The PE 2 sends the output data (including the request ID 4) of the task 3 to the execution device of the task 4. Because the task 4 is an unoffloadable task, and the execution device of the task 4 is the working node, the network interface card may send the output data of the task 3 to the processor of the working node 20a, and the working node 20a performs processing.

Subsequently, the working node 20a sends output data (including the request ID 5) of the task 4 to an execution device of the task 5. Specifically, the working node 20a sends the output data of the task 4 to the network interface card. The network interface card determines, based on the first correspondence, a PE corresponding to the request ID 5, that is, a PE 3, and routes the output data of the task 4 to the PE 3. The rest may be deduced by analogy, and the procedure ends until the working node 20a obtains a final query result.

It should be noted that another working node, for example, the working node 20b, further needs to send an output data packet of the task 5 to the network interface card of the working node 20a. After all output data packets of the task 5 from the working node 20a to the working node 20e arrive, the PE 4 executes the task 6 to obtain the final query result. When the output data is divided into a plurality of data packets for transmission, the last data packet may further carry an end identifier, and the end identifier indicates whether the data packet is the last data packet of the current request ID. A receive end determines, based on the end identifier, whether transmission of data on a peer working node is completed.

It should be noted that the format of the second setting instruction is merely an example. Actually, the second setting instruction may include more or less content than that in the example listed above. This is not limited in this embodiment of this application. For example, the second setting instruction may include padding data, so that a length of the second setting instruction is enabled to be a preset length.

In another implementable manner, for the offloadable task, the central node may further directly send, based on the task scheduling plan, an offloading command of the offloadable task to each execution device that is set to execute the task, for example, a network interface card of a working node or a forwarding device. The following provides another data query method in embodiments.

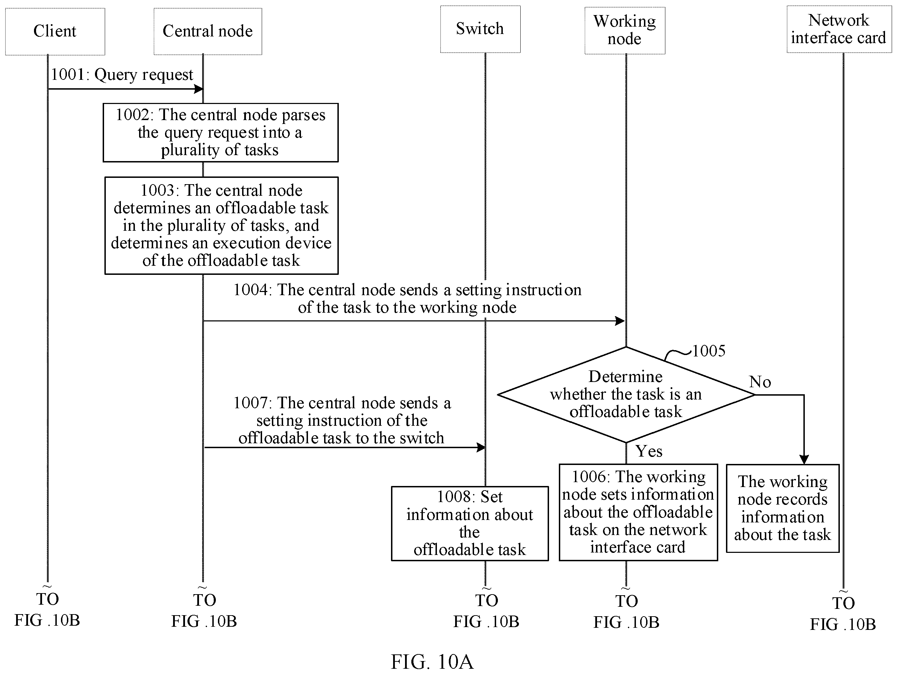

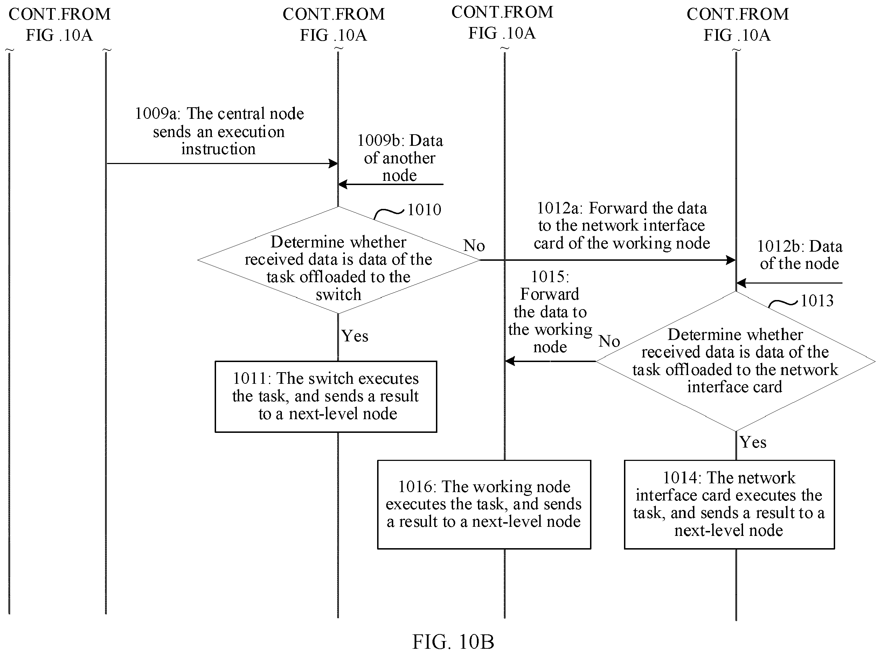

FIG. 10A and FIG. 10B are a schematic flowchart corresponding to the another data query method according to an embodiment. In this embodiment of the present invention, in addition to the network interface card of the working node described in the first embodiment, a forwarding device in a network, for example, a switch or a router, may also be set as an execution device of an offloadable task. A manner of setting the offloadable task in the network interface card of the working node is the same as that in the embodiment shown in FIG. 6. In other words, for step 1001 to step 1006 and step 1013 to step 1016 in this embodiment, refer to related descriptions of step 601 to step 606 and step 608 to step 611 in FIG. 6. Details are not described herein again. The following describes only differences.

The following mainly describes a manner of setting the offloadable task when the execution device of the offloadable task is the forwarding device. For ease of description, an example in which the forwarding device is a switch is used below for description.

In this embodiment, the SQL statement in the embodiment of FIG. 6 is further used as an example for description.

Table 11 shows another task scheduling plan generated for the SQL statement in the foregoing step 602, and execution devices of offloadable tasks in the task scheduling plan include switches. For example, an execution device of a task 1 is a switch 30, and an execution device of a task 6 is a switch 40.

**Table 11**

| Task identifier | Offloadable task or not | Execution device | Storage information |
|---|---|---|---|
| Task 1 | Yes | Switch 30 | NULL |
| Task 2 | Yes | Network interface card of a working node 20a | Storage information of Table 2 |
| Task 3 | Yes | Network interface card of the working node 20a to network interface card of a working node 20e | NULL |
| Task 4 | No | Working node 20a to working node 20e | NULL |
| Task 5 | Yes | Network interface card of the working node 20a to network interface card of the working node 20e | NULL |
| Task 6 | Yes | Switch 40 | NULL |

It should be understood that Table 11 is merely an example, and does not constitute a limitation on the task scheduling plan in this application.

When the execution device, of the offloadable task, determined in step 1003 is a switch, for setting of the offloadable task by a central node, refer to descriptions in step 1007 and step 1008.

Step 1007: The central node sends a setting instruction of the offloadable task to the switch, where the switch is set as the execution device of the offloadable task.

Actually, all data packets sent by the central node, a storage node, and the working node are first routed to switches in network segments respectively corresponding to the central node, the storage node, and the working node. To distinguish between a data packet to be forwarded and a data packet configured for the switch, in this embodiment, the switch includes at least two ports, which are separately a data port and a control port. When the switch receives a data packet through the data port, it indicates that the data packet is a data packet that needs to be forwarded, and the switch forwards, based on a destination IP address of the data packet, the data packet to a device corresponding to the destination IP address. If the switch receives a data packet through the control port, it indicates that the data packet is a data packet configured by the central node for the switch, and the switch needs to perform configuration based on the data packet. For example, the data packet includes the setting instruction, of the task, sent by the central node to the switch.

With reference to Table 11, the central node sends a setting instruction of the task 1 to the switch 30, and the central node sends a setting instruction of the task 6 to the switch 40.

For example, the central node may send a first setting instruction of the offloadable task to the control port of the switch, to indicate the switch to set, based on the first setting instruction, information about the offloadable task. For another example, the central node may send a second setting instruction (an offloading command) of the offloadable task to the control port of the switch, to indicate the switch to set, based on the offloading command, information about the offloadable task. An example in which the setting instruction is the offloading command is used below for description.

Step 1008: The switch sets the information about the offloadable task.

Correspondingly, when receiving an offloading command of the task 1 through a control port of the switch 30, the switch 30 records information about the task 1 (including operator information of the task 1, a request ID 1, and the like) based on the offloading command. Similarly, when receiving an offloading command of the task 6 through a control port, the switch 40 records information about the task 6 (including operator information of the task 6, a request ID 6, and the like) and the like based on the offloading command. Subsequently, the switch that is set to process the offloadable task monitors whether a request ID of each received data packet belongs to the task offloaded to the local switch. If yes, the switch processes data. Otherwise, the switch forwards data to a destination IP address of the data. Step 1009a: The central node sends execution instructions of the task 1 and the task 2.

The execution instruction herein may be the foregoing start command.

As described above, all the data packets sent by the central node, the storage node, and the working node are first routed to the switches in the network segments respectively corresponding to the central node, the storage node, and the working node. In other words, the execution instruction sent by the central node is also first routed to the switch. Step 1009b: The switch receives data of another node.

The another node may be the working node, the central node, the storage node, or another forwarding device.

Step 1010: The switch determines whether the received data belongs to the task offloaded to the switch. If yes, step 1011 is performed. Otherwise, step 1012a is performed.

The data received by the switch includes a setting instruction, an execution instruction, slice data, of Table 1 or Table 2, sent by the storage node, or output data obtained by another working node by executing a task. For step 1010, refer to a specific operation performed by the network interface card in step 608. Details are not described herein again.

It should be understood that the switch first receives the execution instructions, of the task 1 and the task 2, sent by the central node. The switch determines whether the task 1 and the task 2 are tasks offloaded to the switch. If not, the switch separately forwards the execution instructions of the task 1 and the task 2 to devices corresponding to destination IP addresses.

It should be understood that step 1010 may also be a step that is cyclically performed until a query system obtains a final query result.

Step 1011: The switch executes the task, and returns an execution result of the task to a next-level node in the execution plan.

The following briefly describes a procedure of executing the task by the switch.

The task 1 is used as an example. First, refer to the following configurations: (working node 20a, slice 1), (working node 20b, slice 2), (working node 20c, slice 3), (working node 20d, slice 4), and (working node 20e, slice 5).

Based on the foregoing configurations, the central node sends a first execution instruction of the task 1 to the working node 20a, to indicate, by using the first execution instruction, the working node 20a to read data of the slice 1. Similarly, the central node sends a second execution instruction of the task 1 to the working node 20b, to indicate, by using the second execution instruction, the working node 20b to read data of the slice 2. The rest may be deduced by analogy. The working node 20a is used as an example. The working node 20a receives the first execution instruction, and sends, based on slice information of the slice 1, a read request (including the request ID 1) to a storage node corresponding to the slice 1. With reference to FIG. 4, it may be understood that a transmission path of the read request is the working node 20a→a switch 10→the switch 40→the switch 30→the storage node.

Correspondingly, in response to the read request, the storage node sends a feedback data packet (including the request ID 1) of the slice 1, and a destination IP address of the feedback data packet is the working node 20a. Similarly, after the storage node sends the data packet, the data packet is first routed to the switch 30. The switch 30 detects whether the feedback data packet is data of a task offloaded to the switch 30, that is, data of the task 1. If yes, the switch 30 executes the task 1 based on the feedback data packet. Otherwise, the switch 30 sends the data packet to the destination IP address corresponding to the data packet.

Clearly, after receiving the data packet of the slice 1 sent by the storage node, the switch 30 determines that the data packet is a data packet of the task 1. Then, the switch 30 performs a filter operation on data in the data packet by using a filter operator based on the operator information of the task 1 and an execution rule of the filter operator, to obtain a filtering result, that is, output data of the task 1. The switch 30 encapsulates the output data in an output data packet. As described above, the output data packet carries a request ID of a next task of the task 1, that is, a request ID 3. In addition, the switch 30 sends, based on the destination IP address carried in the data packet of the slice 1 received from the storage node, the output data packet to the destination IP address, that is, the working node 20a.

Similarly, details of an interaction manner between the switch 30 and any other working node are not described herein again. It should be noted that the foregoing manner of setting operator information by using an execution instruction is merely an example. In this embodiment, a correspondence between each working node and slice information may also be sent to the switch 30 by using the setting instruction of the task 1, for example, the offloading command, and the switch 30 distributes filtering results of slices in Table 1, to achieve an effect the same as that in the foregoing example.

Step 1012a: The switch forwards the data to a network interface card of a corresponding working node.

Step 1012b: The network interface card of the working node receives data of the working node. It should be noted that step 1012b is an optional step, and is not a mandatory step, and a time sequence of step 1012b and step 1012a is not strictly limited. Subsequent steps 1013 to 1016 are the same as steps 608 to 611 in FIG. 6, and details are not described herein again.

For the execution procedure shown in Table 11, for execution processes of the task 1 and the task 5, refer to the foregoing related descriptions. Details are not described herein again. The switch 40 that executes the task 6 is a next-level node of the working node 20a to the working node 20e. The working node 20a to the working node 20e separately send respective output data (carrying the request ID 6) of the task 5 to the switch 40. If the switch 40 receives the data and determines that the task 6 needs to be executed on the data, the switch 40 processes the data based on an operator corresponding to the task 6 and an execution rule, to obtain a final query result. Then, the switch 40 sends the obtained query result to the central node, and the central node returns the query result to a client.

In the foregoing design, the offloadable task is offloaded to a network device for processing, so that a load of a processor of the working node is reduced, and an amount of data transmitted in the network can be further reduced.

It should be noted that the foregoing manner of determining the offloadable task is merely an example. This is not limited in embodiments of this application. A task that is suitable to be offloaded to a network interface card or a forwarding device for processing is offloaded to the network interface card of a working node or the forwarding device for processing, so that a load of a processor of the working node can be reduced, and an amount of data transmitted in a network can be reduced. However, in some scenarios, offloading a task to a network interface card or a switch for processing may affect execution efficiency. Therefore, in another implementation of the present invention, an offloading policy may be further set for a preset offloading task in the central node, and whether the offloading task can be offloaded is determined based on the set offloading policy. Only a task that meets the offloading policy is set as an offloadable task.

To facilitate understanding of offloading policies of the following tasks, the following descriptions are first provided. A data source may analyze a stored data table to obtain data distribution information of the data table, where the data distribution information includes a total amount n of data in a column in the data table, and indicates data distribution information of the column of data in the data table in different intervals. For example, if a person registration table includes an age column, data distributions of the age column in the table may be a quantity (denoted as a quantity a) of persons aged 1 to 10, a quantity (denoted as a quantity b) of persons aged 11 to 20, and a quantity (denoted as a quantity c) of persons aged 21 to 30.

The central node may send a request for obtaining data distribution information of a to-be-queried data table to the data source. Correspondingly, a storage node sends the data distribution information requested by the central node to the central node. Based on the data distribution information, the central node may roughly calculate a selection rate of a filter operator, a cardinality of an aggregation column of an aggregation operator, and the like. For example, if an execution rule of a filter operator is a person aged 1 to 30, a selection rate of the filter operator is (a+b+c)/n. Certainly, a data distribution status is rough statistics, and the selection rate or the cardinality of the aggregation column obtained based on the statistics is not an accurate selection rate. The related content is not described again below.

The following separately describes specific tasks by using examples.

### 1. Filter operator

When the central node sets the filter operator as an offloadable operator, an offloading policy correspondingly set for the filter operator may be: When a selection rate of the filter operator is low, for example, lower than a first preset value, a task to which the filter operator belongs is an offloadable task. The selection rate may be determined based on a ratio of a row that meets a filter condition to all rows included in to-be-queried original data. The task 1 is used as an example. It is assumed that Table 1 includes 10000 rows, and only 10 rows meet a condition that a date is 2020/01/02. In this case, a selection rate is 10/10000*100%=0.1%. If the first preset value is 1%, the selection rate of the task 1 is less than the first preset value. In this case, it is determined that the task 1 is an offloadable task. It should be understood that the first preset value is merely an example, and all specific values listed in this embodiment are examples. This is not limited.

If the selection rate is low, the central node may offload the task to a network interface card of a storage node or a switch for processing, to reduce an amount of data transmitted in the network. For example, when a storage node and a working node are deployed on different devices, the central node may further offload the task 1 to a network interface card of the storage node for processing. The storage node only needs to send 10 rows of data to the working node, and does not need to send the complete read Table 1 to the working node. In this way, a small amount of data is sent by the storage node to the working node, that is, a small amount of data is transmitted in the network. Therefore, occupation of a large amount of network bandwidth can be avoided while a CPU load is reduced. Alternatively, the task 1 may be offloaded to a network interface card of the working node for processing. The network interface card of the working node performs filtering, and a CPU of the working node does not need to execute the task, so that a load of the CPU is reduced. In addition, the network interface card does not need to send a large amount of data to the CPU, so that data exchange in the working node is also reduced.

### 2. Aggregation operator

When the central node sets the aggregation operator as an offloadable operator, an offloading policy correspondingly set for the aggregation operator may be: If a cardinality of a column on which aggregation needs to be performed is low, for example, lower than a second preset value, it is determined that a task to which the aggregation operator belongs is an offloadable task.

For example, when sales of a commodity A in Table 1 is calculated, the sale column is a column on which aggregation needs to be performed. If the commodity A has 10 rows of sales records, sale values of the 10 rows need to be aggregated, and the 10 rows may be understood as a cardinality of the column on which aggregation needs to be performed. For example, if the second preset value is 100, it may be determined that the task executed by using the aggregation operator is an offloadable task.

An offloadable task of an aggregation operator type may be offloaded to a network interface card of a working node or a switch for processing. For example, when a cardinality of a column on which aggregation needs to be performed in an aggregation task is low, the offloadable task may be offloaded to the switch for processing. In this way, occupation of a large quantity of computing resources of the switch is avoided, and an amount of data transmitted in the network can also be reduced.

### 3. Distinct operator

An offloading policy of the distinct operator is similar to the offloading policy of the aggregation operator. Specifically, the offloading policy of the distinct operator is based on a cardinality of a distinct column. For example, if the cardinality of the distinct column does not exceed a third preset value, a task to which the distinct operator belongs is an offloadable task. A difference between the offloading policy of the distinct operator and the offloading policy of the aggregation operator lies in: For the aggregation operator, grouping is performed on data based on a group by column, and an operation such as sum, min, max, count, or avg is performed on grouped data. For the distinct operator, grouping needs to be performed on only the distinct column.

An offloadable task of a distinct operator type may be offloaded to a network interface card of a working node or a switch for processing.

### 4. Dynamic filter operator

The dynamic filter operator is used to filter a large table by using a small table when two tables are joined by using a join operator.

With reference to the two scenarios shown in FIG. 4 and FIG. 5, using the task 3 as an example, the following separately describes dynamic filter operator execution procedures of the join operator of the task 3 in the two scenarios. As described above, reading a slice of Table 1 is allocated by the central node to the working node. For a procedure of executing the task 1 by each working node, refer to the foregoing descriptions. Details are not described herein again.

Table 2 needs to be joined with Table 1, to be specific, values in the ID column in Table 1 need to be filtered based on values in the ID column in Table 2, and whether the values in the ID column in Table 1 exist in the ID column in Table 2 is queried. Therefore, each working node needs to know a value of each row of Table 2 in the ID column. In this case, the central node may not divide Table 2 into different slices, and each working node reads the complete Table 2. Certainly, to improve query efficiency, the central node may also divide Table 2 into different slices, and each working node reads one or more slices of Table 2. Then, each working node may send an ID column in the read slice to the central node, and the central node obtains the complete ID column in Table 2 by combining ID columns returned by working nodes.

Scenario 1: A scenario in which a storage node and a working node are integrated, in other words, the storage node and the working node are deployed on a same physical node, as shown in the scenario in FIG. 5.

In this scenario, the dynamic filter operator is more suitable to be offloaded to a network interface card of the working node, in other words, the network interface card of the working node is an execution device of the dynamic filter operator. For example, with reference to FIG. 5, in this scenario, a procedure of joining Table 1 and Table 2 by using the join operator includes the following steps:
(1) Each working node to which the task 2 is allocated reads a slice in Table 2, creates a BF in a column, specified by an ON clause, of data of the slice, to obtain a BF column, and sends the obtained BF column to the central node. The BF column may include duplicate ID values, or deduplication may be performed on the ID column by using a distinct operator. This is not limited in this embodiment of this application.

It is assumed that Table 2 also has five slices, for example, slices 11 and 12, and the working node 20a to the working node 20e each read one slice. In the foregoing example, a specific process may be as follows: The working node 20a reads the slice 11, creates a BF in a column, specified by an ON clause, of read data of the slice 11, and sends the obtained BF to the central node 100. The working node 20b reads the slice 12, creates a BF in a column, specified by an ON clause, of read data of the slice 12, and sends the obtained BF to the central node 100. The working node 20c reads a slice 13, creates a BF in a column, specified by an ON clause, of read data of the slice 13, and sends the obtained BF to the central node 100. The rest may be deduced by analogy.
(2) The central node combines BFs sent by working nodes, to obtain the complete ID column of Table 2 after combination. Specifically, the central node 100 receives BF columns of the slices of Table 2 from the working node 20a to the working node 20e, and combines the BF columns of the slices to obtain a complete BF column of Table 2, that is, the ID column.
(3) The central node sends the obtained complete ID column of Table 2 to network interface cards of the working nodes.

Because an output result of the task 2 is input data of the task 3, the central node may send the complete BF column of Table 2 to each execution device of the task 3. For example, execution devices of the task 3 are network interface cards of the working node 20a to the working node 20e. In this case, the central node may separately send the complete ID column of Table 2 to the network interface card of the working node 20a, the network interface card of the working node 20b, the network interface card of the working node 20c, the network interface card of the working node 20d, and the network interface card of the working node 20e.

It should be noted that, if the execution device of the task 3 in this scenario is one or more switches, the central node 100 may send the complete BF column of Table 2 to the one or more switches. For ease of description, an example in which the execution device of the task 3 is a network interface card is used for description below.
(4) The network interface card of the working node executes the task 1, reads one or more slices of Table 1, and filters read data to obtain rows with data=20200102.

It should be understood that step (4) and steps (1) to (3) are parallel tasks, and the steps herein do not indicate a time sequence relationship.
(5) The network interface card of the working node filters out, based on the BF column in Table 2, a row, in the rows with data=20200102, with an ID existing in the ID column of Table 2.

Scenario 2: A scenario in which a storage node and a working node are separately deployed, in other words, the storage node and the working node are separately deployed on different physical nodes, as shown in the scenario in FIG. 4.

In this scenario, because the working node needs to exchange data with the storage node through a switch between the working node and the storage node, in this scenario, the switch may filter the data that passes through the switch, to reduce an amount of data transmitted in the network. In other words, the switch is an execution device of the dynamic filter operator.

For example, with reference to FIG. 4, it is assumed that the task 1 is offloaded to a network interface card of a storage node for execution, and dynamic filtering in the task 3 is offloaded to the switch 30 for execution. In the scenario shown in FIG. 4, a procedure of performing table joining on Table 1 and Table 2 by using the join operator includes the following steps:
(1) A working node sends read requests of the task 2 and the task 1 to the storage node.
(2) The storage node sends, to the switch 30, data of the task 2 read by the working node, filters data of the task 1 read by the working node, and then sends filtered data to the switch 30.
(3) The switch 30 creates a BF based on data, of the task 2, returned by each storage node, to obtain a complete BF column of Table 2, and filters, based on the BF column, received filtered data of Table 1, to obtain a row, in rows with data=20200102, with an ID column equal to the BF column in Table 2.
(4) The switch 30 sends, to the corresponding working node, the obtained row, in the rows with data=20200102, with the ID column equal to the BF column in Table 2.
(5) The working node performs joining by using data obtained after filtering by the switch 30.

The foregoing steps are a dynamic filtering process of the join operator. In the foregoing scenarios, dynamic filtering of the join operator may be offloaded to the network interface card of the working node for execution, or may be offloaded to the switch that is passed through in an interaction process between the central node and the working node for execution. An offloading policy is performing determining based on a selection rate during large table filtering. In this embodiment, for an offloadable task that can be offloaded to a plurality of devices, when determining an execution device of the offloadable task, the central node may further determine the execution device based on priorities of the devices corresponding to the preset offloadable task. For example, the execution device may be a device with the highest priority in the devices corresponding to the offloadable task. For example, for an offloadable task including a filter operator, priorities of corresponding devices are sequentially: a network interface card of a storage node, a switch on a rack on which the storage node is located, a switch on a rack on which a working node is located, a core switch, a network interface card of the working node, and the like. Based on the sequence, it may be determined that the network interface card of the storage node may be an execution device of the task 1.

It should be noted that the foregoing manner of determining the execution device is merely an example, and the execution device may also be determined with reference to the priorities and load states of the devices. For example, although the network interface card of the storage node has the highest priority for the offloadable task, if performance of the storage node is low or a load is high, the task 1 may not be offloaded to the network interface card of the storage node, and whether a next device can be used as the execution device is sequentially determined based on the priorities. In addition, for a manner of offloading the offloadable task to the network interface card of the storage node for processing, refer to the foregoing descriptions of the specific procedure in which the working node offloads the offloadable task to the local network interface card of the working node. Details are not described below again. Certainly, to reduce a load of the network interface card, the working node may alternatively selectively offload a part of offloadable tasks to the network interface card based on a preset offloading policy. For example, the preset offloading policy on the working node may be formulated based on a load balancing principle. Details are not described herein.

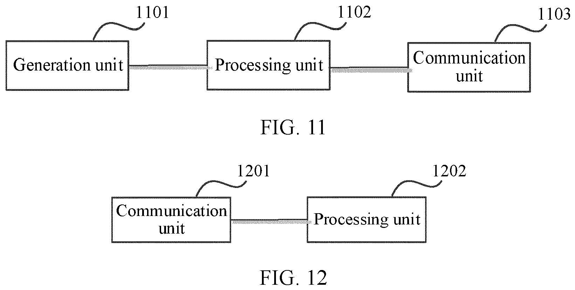

Based on a same inventive concept as the method embodiments, an embodiment of this application further provides a device, configured to perform a function performed by the central node in FIG. 6 or FIG. 10A and FIG. 10B in the foregoing method embodiments. As shown in FIG. 11, the device includes a generation unit 1101, a processing unit 1102, and a communication unit 1103.

The generation unit 1101 is configured to: receive a query request sent by a client, and parse the query request input by a user into a plurality of tasks. For a specific implementation, refer to descriptions of steps 601 and 602 in FIG. 6 and steps 1001 and 1002 in FIG. 10A and FIG. 10B. Details are not described herein again.

The processing unit 1102 is configured to: determine an offloadable task in the plurality of tasks, and determine an execution device of the offloadable task. A network device may be a network interface card of a working node or a forwarding device, and the forwarding device includes a switch and a router. For a specific method for determining the offloadable task and the execution device of the offloadable task, refer to descriptions of step 603 in FIG. 6 and step 1003 in FIG. 10A and FIG. 10B. Details are not described herein again.

The communication unit 1103 is further configured to send a setting instruction of each task, to set, on each execution device, a task to be executed by the execution device. For a specific implementation, refer to related descriptions of step 604 in the embodiment of FIG. 6 and related descriptions of steps 1004 and 1007 in the embodiment of FIG. 10A and FIG. 10B.

After sending the setting instruction of each task to set the corresponding task on each execution device, the communication unit 1103 may send an execution instruction of the query request, where the execution instruction is used to trigger the execution device to execute the set task. For details, refer to descriptions in step S607a in FIG. 6 and step 1009a in FIG. 10A and FIG. 10B. Details are not described herein again.

Based on a same inventive concept as the method embodiments, an embodiment of this application further provides a network device, configured to perform a function performed by the network device (a switch, a router, or a network interface card of a working node) in FIG. 6 or FIG. 10A and FIG. 10B in the foregoing method embodiments. As shown in FIG. 12, the device includes a communication unit 1201 and a processing unit 1202.

The communication unit 1201 is configured to receive a setting instruction sent by a central node, where the setting instruction is used to set, on the network device, a task that needs to be executed by the network device when a query request is executed. When the network device is a network interface card, for a specific procedure, refer to related descriptions of step 607a, step 610, step 1012a, and step 1015 in FIG. 6. When the network device is a forwarding device, for a specific procedure, refer to related descriptions of step 1009a and step 1012a in FIG. 6.

Detailed descriptions of step 1004 in FIG. 10A and FIG. 10B are not described herein again.

The processing unit 1202 is configured to: set the task based on the setting instruction, and execute the task on data that passes through the network device. When the network device is a network interface card, for a specific implementation, refer to related descriptions of step 608 and step 609 in the embodiment of FIG. 6, and related descriptions of steps 1013 and 1014 in the embodiment of FIG. 10A and FIG. 10B. When the network device is a forwarding device, for a specific implementation, refer to related descriptions of steps 1010 and 1011 in the embodiment of FIG. 10A and FIG. 10B.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. Clearly, a person skilled in the art can make various modifications and variations to this application without departing from the scope of this application. This application is intended to cover these modifications and variations of this application provided that they fall within the scope of protection defined by the following claims and their equivalent technologies.

## Claims

1. A data query system, comprising a central node, a working node, and a network device, wherein the central node is connected to the working node through the network device;
the central node is configured to: generate, based on a query request, a plurality of tasks for executing the query request; determine an execution device of each task in the plurality of tasks, wherein execution devices of the plurality of tasks comprise the working node and the network device; and send a setting instruction of each task, wherein the setting instruction is used to set, on each execution device, a task to be executed by the execution device; and
the working node and the network device are configured to execute the set tasks.

2. The system according to claim 1, wherein when being configured to determine the execution device of each task in the plurality of tasks, the central node is specifically configured to: search for an offloadable task in the plurality of tasks, and determine that an execution device of the offloadable task is the network device, wherein the offloadable task is a preset task that is to be offloaded to the network device for execution.

3. The system according to claim 2, wherein the central node is configured to send a setting instruction of the offloadable task to the network device; and
the network device is configured to set the offloadable task based on the setting instruction.

4. The system according to any one of claims 1 to 3, wherein the network device is a network interface card of the working node or a forwarding device, and the forwarding device comprises a switch and a router.

5. The system according to any one of claim 4, wherein the forwarding device comprises a data port and a control port, and the central node is configured to: send a setting instruction of an offloadable task whose execution device is the forwarding device to the forwarding device through the control port, and send a setting instruction of a task whose execution device is the network interface card or the working node to the forwarding device through the data port; and
the forwarding device is configured to: set the offloadable task based on the setting instruction received from the control port, and forward the setting instruction received from the data port.

6. The system according to claim 4, wherein when the network device that executes the offloadable task is the network interface card of the working node, the central node is configured to send the setting instruction of the offloadable task to the working node; and
the working node sets the offloadable task on the network interface card of the working node based on the setting instruction.

7. The system according to claim 6, wherein the setting instruction of the offloadable task comprises an offloadable flag; and
the working node sets the offloadable task on the network interface card of the working node after receiving the setting instruction and when determining that the setting instruction comprises the offloadable flag.

8. The system according to any one of claims 2 to 7, wherein after receiving a data packet and when determining that the data packet comprises an identifier of the offloadable task executed by the network device, the network device executes the offloadable task based on the data packet.

9. The system according to any one of claims 3 to 7, wherein when being configured to send the setting instruction of the offloadable task to the network device, the central node is specifically configured to send the setting instruction of the offloadable task to the network device after determining the offloadable task and when determining that the offloadable task meets an offloading policy corresponding to the offloadable task.

10. A data query method, applied to a central node, wherein the central node is connected to a working node through a network device, and the method comprises:
generating, based on a query request, a plurality of tasks for executing the query request;
determining an execution device of each task in the plurality of tasks, wherein execution devices of the plurality of tasks comprise the working node and the network device; and sending a setting instruction of each task, wherein the setting instruction is used to set, on each execution device, a task to be executed by the execution device.

11. The method according to claim 10, wherein the determining an execution device of each task in the plurality of tasks comprises: searching for an offloadable task in the plurality of tasks, and determining that an execution device of the offloadable task is the network device, wherein the offloadable task is a preset task that is to be offloaded to the network device for execution.

12. The method according to claim 11, wherein when the execution device of the offloadable task is the network device, the sending a setting instruction of each task comprises: sending a setting instruction of the offloadable task to the network device.

13. The method according to claim 11, wherein when it is determined that the network device that executes the offloadable task is a network interface card of the working node, the sending a setting instruction of each task comprises: sending a setting instruction of the offloadable task to the working node, to indicate the working node to set the offloadable task for the network interface card of the working node.

14. The method according to claim 13, wherein the setting instruction comprises an offloadable flag, and the offloadable flag is used to mark a task set by using the setting instruction as an offloadable task.

15. The method according to any one of claims 12 to 14, wherein the sending a setting instruction of the offloadable task to the network device comprises: sending the setting instruction of the offloadable task to the network device after determining the offloadable task and when determining that the offloadable task meets an offloading policy corresponding to the offloadable task.

16. A data query method, applied to a network device, wherein the network device is configured to be connected to a central node and a working node, and the method comprises:
receiving a setting instruction, wherein the setting instruction is used to set, on the network device, a task that needs to be executed by the network device when a query request is executed;
setting the task based on the setting instruction; and
executing the task on data that passes through the network device.

17. The method according to claim 16, wherein the network device is a network interface card of the working node or a forwarding device, and the forwarding device comprises a switch and a router.

18. The method according to claim 17, wherein the forwarding device comprises a data port and a control port, and the method further comprises:
setting, on the forwarding device based on a setting instruction received from the control port, an offloadable task indicated by the setting instruction; and forwarding a setting instruction received from the data port.

19. The method according to any one of claims 16 to 18, wherein the executing the task on data that passes through the network device comprises:
after receiving a data packet and when determining that the data packet comprises an identifier of the offloadable task executed by the network device, executing the offloadable task based on the data packet.

20. A data query interface, comprising:
a query command input area, used to receive a query request input by a user;
a task display area, used to display a plurality of tasks that are generated based on the query request and that are for executing the query request; and
an execution device display area, used to display an execution device of each task, wherein execution devices comprise a working node and a network device.

21. The interface according to claim 20, wherein
the query command input area, the task display area, and the execution device display area are displayed on a same interface.

22. The interface according to claim 20, wherein
the query command input area, the task display area, and the execution device display area are displayed on different interfaces.

23. A central node, wherein the central node comprises at least one unit configured to perform the steps of the method according to any one of claims 10 to 16.

24. A network device, wherein the device comprises at least one unit configured to perform the steps of the method according to any one of claims 17 to 20.

25. A central node, comprising a memory and a processor, wherein the memory stores program instructions, and the processor runs the program instructions to perform the method according to any one of claims 10 to 15.

26. A network device, wherein the device comprises a processing unit and a storage unit, the storage unit stores executable code, and the processing unit executes the executable code to implement the method according to any one of claims 16 to 19.

27. A network device, wherein the device comprises:
a communication interface, configured to perform data transmission with a central node and a working node; and
a processing unit, configured to process data received by the communication interface, to perform the method according to any one of claims 16 to 19.
